(19) Europäisches Patentamt
European Patent Office
Office européen des brevets

(11) EP 4 742 770 A1

(12) EUROPEAN PATENT APPLICATION
published in accordance with Art. 153(4) EPC

(43) Date of publication:
13.05.2026 Bulletin 2026/20

(21) Application number: 23951108.2

(22) Date of filing: 05.09.2023

(51) International Patent Classification (IPC):
H04W 52/02 (2009.01)

(52) Cooperative Patent Classification (CPC):
H04W 52/02

(86) International application number:
PCT/CN2023/116949

(87) International publication number:
WO 2025/050279 (13.03.2025 Gazette 2025/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Huawei Technologies Co., Ltd.
Shenzhen, Guangdong 518129 (CN)

(72) Inventors:
• WANG, Xiaolu
  Shenzhen, Guangdong 518129 (CN)
• LUO, Hejia
  Shenzhen, Guangdong 518129 (CN)
• WANG, Jun
  Shenzhen, Guangdong 518129 (CN)
• MA, Jianglei
  Shenzhen, Guangdong 518129 (CN)

(74) Representative: Pfenning, Meinig & Partner mbB
Patent- und Rechtsanwälte
Theresienhöhe 11a
80339 München (DE)

(54) COMMUNICATION METHOD AND APPARATUS, AND STORAGE MEDIUM AND COMPUTER PROGRAM PRODUCT

(57) This application discloses a communication method and apparatus, a storage medium, and a computer program product, and relates to the field of communication technologies, to cause a terminal apparatus to stop PDCCH blind detection in some durations, thereby reducing power consumption of the terminal apparatus. In this application, the terminal apparatus performs blind detection on a PDCCH. The PDCCH is used to schedule first data in an $i^{th}$ transmission, where i is a positive integer less than or equal to $N_0$, $N_0$ is a quantity of allowed transmissions of the first data, and $N_0$ is a positive integer greater than 1. After successfully decoding a PDCCH or a PDSCH, the terminal apparatus stops PDCCH blind detection in a first duration, and sends first information. The first information includes: information indicating that the first data is successfully decoded, or the first data. Because the terminal apparatus may stop PDCCH blind detection, power consumption of the terminal apparatus can be reduced.

FIG. 4

**Description**

TECHNICAL FIELD

This application relates to the field of communication technologies, and in particular, to a communication method and apparatus, a storage medium, and a computer program product.

BACKGROUND

Currently, a 5th generation mobile network (the 5th generation, 5G) new radio (new radio, NR) technology is evolving from Release R18 to Release R19. In addition, the NR technology also enters a commercial deployment phase from a standardization phase. The NR standard protocol can be used for wireless communication technologies designed for terrestrial cellular network scenarios, and can provide users with wireless communication services featuring ultra-low latency, ultra-high reliability, ultra-high speed, and ultra-large connection. In comparison with terrestrial communication, non-terrestrial network (non-terrestrial network, NTN) communication has features such as a large coverage area and flexible networking, and can achieve seamless global network coverage. NTN communication includes networking by using devices such as an uncrewed aerial vehicle, a high-altitude platform, and a satellite, to provide services such as data transmission and voice communication for user equipment (user equipment, UE).

In some communication scenarios (for example, NR or NTN), data transmission between apparatuses is affected, and consequently, a series of problems are caused. For example, in a satellite mobile communication scenario, when a mobile terminal transmits data to a satellite, signals are affected by sudden/short-time blocking caused by a guideboard, a street lamp, and the like. As a result, a signal to noise ratio (signal to noise ratio, SNR) of a link suddenly decreases, and a blocking duration may reach tens of milliseconds (millisecond, ms), causing problems such as an error floor (error floor), a fluctuant data transmission rate, and an increased quantity (probability) of data retransmissions.

To alleviate impact of burst blocking in a satellite mobile communication scenario, a data retransmission mechanism is usually used currently. For example, in the satellite mobile communication scenario, a satellite may schedule retransmission of a same physical downlink shared channel (physical downlink shared channel, PDSCH) by using a plurality of physical downlink control channels (physical downlink control channel, PDCCH). Alternatively, the satellite may schedule uplink data transmission by using a plurality of PDCCHs, and a mobile terminal repeatedly transmits, based on scheduling performed by using the plurality of PDCCHs, same data on physical uplink shared channels (physical uplink shared channel, PUSCH) scheduled by using the plurality of PDCCHs.

In a retransmission mechanism, how to further reduce power consumption of a communication apparatus becomes a problem to be urgently resolved.

SUMMARY

This application provides a communication method and apparatus, a storage medium, and a computer program product, to cause a terminal apparatus to stop PDCCH blind detection in some durations, thereby reducing power consumption of the terminal apparatus.

**According to a first aspect,** this application provides a communication method. The method is performed by a terminal apparatus. The terminal apparatus may be a terminal, or may be a unit, a module, or a chip in a terminal.

In the method, the terminal apparatus performs blind detection on a PDCCH. The PDCCH is used to schedule first data in an $i^{th}$ transmission, where i is a positive integer less than or equal to $N_0$, $N_0$ is a quantity of allowed transmissions of the first data, and $N_0$ is a positive integer greater than 1. After successfully decoding a PDCCH, the terminal apparatus stops PDCCH blind detection in a first duration, and sends first information. The first information includes: information indicating that the first data is successfully decoded, or the first data.

Because the terminal apparatus may stop PDCCH blind detection, power consumption of the terminal apparatus can be reduced.

In a possible implementation, in some scenarios in which a transmission delay is relatively large, for example, in a first communication system (for example, an NTN), a relatively long delay may be taken for first information sent by the terminal apparatus after the terminal apparatus successfully decodes a PDCCH or a PDSCH to reach the network apparatus. Before receiving the first information, the network apparatus may consider that the terminal apparatus fails to decode the PDCCH or the PDSCH. Therefore, the network apparatus may schedule retransmission of the first data by using one or more PDCCHs. However, for the terminal apparatus, the terminal apparatus has successfully decoded the PDCCH or the PDSCH. Therefore, PDCCH blind detection may not be performed on the PDCCH that is subsequently used to schedule retransmission of the first data, thereby reducing power consumption of the terminal apparatus.

In another possible implementation, the terminal apparatus resumes PDCCH blind detection after the first duration. In this way, it can be avoided as much possible that the terminal apparatus misses transmission of subsequent data (the subsequent data may be retransmission of the first data, or may be new data).

In this application, the first data may be uplink data, or may be downlink data.

When the first data may be downlink data, the terminal apparatus successfully decodes the PDCCH, and stops PDCCH blind detection in the first duration after successfully decoding the first data in the $i^{th}$ transmission. The terminal apparatus may send the first information on a first resource. The first resource may include a feedback resource of the first data in the $i^{th}$ transmission. The first information may include information indicating that the first data is successfully decoded. For example, the first information includes an acknowledgment character (acknowledgment, ACK).

When the first data may be uplink data, after successfully decoding the PDCCH, the terminal apparatus stops PDCCH blind detection in the first duration. The terminal apparatus may send the first information on the first resource. The first resource includes a resource of the first data in the $i^{th}$ transmission. The first information includes the first data. The first information may be carried on a PUSCH.

This implementation may be applicable to uplink transmission, or may be applicable to downlink transmission. In this way, an application scope of this application may be expanded.

In a possible implementation, information used for determining the first duration includes one or more of the following content: $N_0$; a duration corresponding to $N_0$ transmissions of the first data; a time interval between two adjacent transmissions of the first data; a time interval between two adjacent PDCCHs; or m. Herein, m is a first quantity of PDCCHs on which PDCCH blind detection is stopped.

In this way, the terminal apparatus can determine, based on a value of m, a second quantity of PDCCHs on which PDCCH blind detection is stopped. The second quantity of PDCCHs may be equal to m, or may be less than m. Then, the terminal apparatus stops PDCCH blind detection in a duration of PDCCH blind detection of the second quantity of PDCCHs, thereby reducing power consumption. The duration of PDCCH blind detection for the second quantity of PDCCHs may be used to replace the first duration in this application. In a possible implementation, the terminal apparatus may determine the duration of PDCCH blind detection of the second quantity of PDCCHs based on a time interval between two adjacent transmissions of the first data (or the time interval between two adjacent PDCCHs). For example, if the value of m is 3, and the time interval between two adjacent transmissions of the first data (or the time interval between two adjacent PDCCHs) is 10 milliseconds, a length of the first duration is 30 milliseconds.

In a possible implementation, the first duration includes a corresponding duration from an $(i+1)^{th}$ transmission to an $(i+k)^{th}$ transmission of the first data, k is determined based on m and $N_1$, $N_1$ is a quantity of remaining allowed transmissions of the first data, and $N_1$ is 0 or a positive integer less than $N_0$. In another possible implementation, the first duration may alternatively include a corresponding duration between a PDCCH used to schedule the $(i+1)^{th}$ transmission of the first data and a PDCCH used to schedule the $(i+k)^{th}$ transmission of the first data.

In a possible implementation, $N_1$ is determined based on a quantity of transmissions of the first data. $N_1$ may alternatively be determined based on at least one of $N_0$; a duration corresponding to $N_0$ transmissions of the first data; a time interval between two adjacent transmissions of the first data; or a time interval between two adjacent PDCCHs. The terminal apparatus may deduce, based on these parameters, the quantity of remaining allowed transmissions of the first data.

In this application, the second quantity of PDCCHs is represented by k. After determining k based on m and $N_1$, the terminal apparatus stops k times of PDCCH blind detection. For example, after the PDCCH or the PDSCH is successfully decoded, PDCCH blind detection is stopped in a duration of k consecutive times of subsequent PDCCH blind detection.

In addition, because $N_1$ is the quantity of remaining allowed transmissions of the first data, the terminal apparatus may consider a factor of the quantity of remaining allowed transmissions of the first data, so that a quantity of times of PDCCH blind detection to be stopped can be more properly determined, thereby avoiding missing transmission of new data as much as possible.

For example, a value of k is a smaller value in m and $N_1$. In this way, a PDCCH on which the terminal apparatus stops PDCCH blind detection is a PDCCH that is allowed to be used to schedule retransmission of the first data. In this way, it can be avoided as much as possible to miss transmission of new data.

In a possible implementation, the value of m may be indicated by the network apparatus, or may be determined by the terminal apparatus. When the first data is downlink data, the value of m is determined based on a time interval between two adjacent transmissions of the first data and a second feedback delay, and the second feedback delay indicates a delay of feedback information corresponding to a PDSCH scheduled by using a PDCCH in a first communication system. When the first data is downlink data, the value of m may alternatively be determined based on a time interval between two adjacent PDCCHs and a second feedback delay. When the first data is uplink data, the value of m is determined based on a second uplink scheduling delay and a time interval between two adjacent transmissions of the first data, and the second uplink scheduling delay indicates a delay of a PUSCH scheduled by using a PDCCH in a first communication system. When the first data is uplink data, the value of m may alternatively be determined based on a time interval between two adjacent PDCCHs and a second uplink scheduling delay.

The second feedback delay or the second uplink scheduling delay may indicate a duration in which the first information sent by the terminal apparatus arrives at the network apparatus. Within the duration, because the network apparatus has not received the first information, a PDCCH sent by the network apparatus is very likely to be used to schedule retransmission of the first data. Therefore, a PDCCH in the first duration determined based on the information is very likely to be used to schedule retransmission of the first data. Because the terminal apparatus has successfully decoded the PDCCH or the PDSCH and returned the first information, before the network apparatus receives the first information, the terminal apparatus may not perform PDCCH blind detection in the first duration, to reduce power consumption.

In a possible implementation, the information used for determining the first duration includes one or more of the following content: a timing advance; an offset (K_mac) between downlink frame timing and uplink frame timing; a scheduling offset (K_offset); a data processing delay ($\triangle t$), where the data processing delay ($\triangle t$) means a processing delay of at least one of a PDCCH, a PDSCH, or a PUSCH; a downlink scheduling delay ($k_0$), where the downlink scheduling delay ($k_0$) indicates a delay of a PDSCH scheduled by using a PDCCH; a first feedback delay ($k_1$), where the first feedback delay ($k_1$) indicates a delay of feedback information corresponding to a PDSCH scheduled by using a PDCCH in a second communication system; or a first uplink scheduling delay ($k_2$), where the first uplink scheduling delay ($k_2$) indicates a delay of a PUSCH scheduled by using a PDCCH in a second communication system.

A duration in which the first information sent by the terminal apparatus arrives at the network apparatus can be deduced based on the foregoing information. Within the duration, because the network apparatus has not received the first information, a PDCCH sent by the network apparatus is very likely to be used to schedule retransmission of the first data. Therefore, a PDCCH in the first duration determined based on the information is very likely to be used to schedule retransmission of the first data. Because the terminal apparatus has successfully decoded the PDCCH or the PDSCH and returned the first information, before the network apparatus receives the first information, the terminal apparatus may not perform PDCCH blind detection in the first duration, to reduce power consumption.

In a possible implementation, the information used for determining the first duration includes at least one of the following content: a second feedback delay, a second uplink scheduling delay, a second duration, or a third duration.

The second feedback delay indicates a delay of feedback information corresponding to a PDSCH scheduled by using a PDCCH in a first communication system. For example, the second feedback delay is determined based on at least one of the TA, the offset (K_mac) between the downlink frame timing and the uplink frame timing, the scheduling offset (K_offset), the data processing delay ($\triangle t$), the downlink scheduling delay ($k_0$), or the first feedback delay ($k_1$).

The second uplink scheduling delay indicates a delay of a PUSCH scheduled by using a PDCCH in a first communication system. For example, the second uplink scheduling delay is determined based on at least one of the TA, the offset (K_mac) between the downlink frame timing and the uplink frame timing, the scheduling offset (K_offset), the data processing delay ($\triangle t$), or the first uplink scheduling delay ($k_2$).

The second duration is determined based on a duration between a time at which the PDCCH is successfully decoded and a transmission end time of a PDCCH in an $N_0^{th}$ transmission. Alternatively, the second duration is determined based on a duration, between a time at which the PDSCH is successfully decoded and a transmission end time of a PDSCH in an $N_0^{th}$ transmission.

The third duration is determined based on at least one of the timing advance, the offset (K_mac) between the downlink frame timing and the uplink frame timing, or the data processing delay ($\triangle t$).

The second feedback delay or the second uplink scheduling delay may indicate a duration in which the first information sent by the terminal apparatus arrives at the network apparatus. The second duration may indicate a deadline for allowed retransmission of the first data. The third duration may also assist the terminal apparatus or the network apparatus in inferring the duration in which the first information sent by the terminal apparatus arrives at the network apparatus. It can be learned that the first duration can be more properly determined based on one or more of the information.

In a possible implementation, when the first data is downlink data, the first duration is a smaller value in the second feedback delay and the second duration. When the first data is uplink data, the first duration is a smaller value in the second uplink scheduling delay and the second duration.

Because the second feedback delay or the second uplink scheduling delay may indicate the duration in which the first information sent by the terminal apparatus arrives at the network apparatus, and the second duration may indicate a deadline for allowed retransmission of the first data, both the transmission delay of the first information and the deadline of retransmission of the first data are considered in determining the first duration. In addition, because the first duration is a smaller value, a time at which the terminal apparatus stops PDCCH blind detection does not exceed the deadline of retransmission of the first data. In this way, the terminal apparatus can be prevented from missing new data as much as possible.

In another possible implementation, the first duration is a smaller value in the second duration and the third duration.

Because the third duration may also assist in determining the duration in which the first information sent by the terminal apparatus arrives at the network apparatus, and the second duration may indicate a deadline for allowed retransmission of the first data, both the transmission delay of the first information and the deadline of retransmission of the first data are considered in determining the first duration. In addition, because the first duration is a smaller value, a time at which the terminal apparatus stops PDCCH blind detection does not exceed the deadline of retransmission of the first data. In this way, the terminal apparatus can be prevented from missing new data as much as possible.

In a possible implementation, the terminal apparatus receives first configuration information, where the first configuration information includes the information used for determining the first duration. The terminal apparatus determines the first duration based on the information used for determining the first duration. In this way, the terminal apparatus may determine the first duration based on information in the first configuration information.

In a possible implementation, the first configuration information includes an index value. The terminal apparatus determines, based on an association relationship between the index value and the information indicating the first duration, the information indicating the first duration. The terminal apparatus determines the first duration based on the information indicating the first duration.

In this solution, signaling overheads can be reduced because the first configuration information may indicate each parameter by using an index value.

In a possible implementation, the terminal apparatus may send the first information for a plurality of times. In this way, reliability of the first information can be improved.

For example, the terminal apparatus sends the first information on the first resource, and sends the first information on a second resource. When the first resource includes the feedback resource of the first data in the $i^{th}$ transmission, the second resource includes the feedback resource of the first data in the $(i+a)^{th}$ transmission, and the first information includes information indicating that the first data is successfully decoded, where a is a positive integer, and $(i+a)$ is less than or equal to $N_0$. When the first resource includes a resource of the first data in the $i^{th}$ transmission, the second resource includes a resource of the first data in the $(i+a)^{th}$ transmission, the first information includes the first data.

In a possible implementation, the PDCCH includes information indicating the $i^{th}$ transmission. In this way, the terminal apparatus can receive, based on decoded information in the PDCCH, the first data on the resource of the first data in the $i^{th}$ transmission.

**According to a second aspect,** this application provides a communication method. The method is performed by a network apparatus. The network apparatus may be a network device, or may be a unit, a module, or a chip in a network device.

In the method, the network apparatus sends a physical downlink control channel PDCCH. The PDCCH is used to schedule first data in an $i^{th}$ transmission, where i is a positive integer less than or equal to $N_0$, $N_0$ is a quantity of allowed transmissions of the first data, and $N_0$ is a positive integer greater than 1. The network apparatus sends first configuration information. The first configuration information includes information used for determining a first duration, and the first configuration information is used by a terminal apparatus to stop PDCCH blind detection in the first duration after the PDCCH is successfully decoded. The network apparatus receives first information. The first information includes: information indicating that the first data is successfully decoded, or the first data.

Because the network apparatus sends the first configuration information, the terminal apparatus may determine the first duration based on the first configuration information, and then stop PDCCH blind detection in the first duration, thereby reducing power consumption of the terminal apparatus.

In a possible implementation, the network apparatus receives the first information on a first resource. When the first resource includes a feedback resource of the first data in the $i^{th}$ transmission, the first information includes information indicating that the first data is successfully decoded. When the first resource includes a resource of the first data in the $i^{th}$ transmission, the first information includes the first data.

In a possible implementation, the network apparatus may receive a plurality of pieces of first information. The network apparatus receives the first information on the first resource, and receives the first information on a second resource.

For beneficial effects in the second aspect and the possible implementations of the second aspect, and related content of the first configuration information, the first duration, the second feedback delay, the second uplink scheduling delay, the first resource, and the second resource, refer to the descriptions in the third aspect and the possible implementations of the third aspect. Details are not described again.

**According to a third aspect,** this application provides a communication method. The method is performed by a terminal apparatus. The terminal apparatus may be a terminal, or may be a unit, a module, or a chip in a terminal.

In the method, the terminal apparatus receives the first data in the $i^{th}$ transmission, where i is a positive integer less than or equal to $N_0$, $N_0$ is a quantity of transmissions of the first data, and $N_0$ is a positive integer greater than 1. The terminal apparatus receives second information. The second information indicates existence of an $(i+1)^{th}$ transmission of the first data. The terminal apparatus receives the first data in the $(i+1)^{th}$ transmission based on the second information.

In the foregoing solution, the network apparatus may not need to map a retransmission resource for a period of time, but indicate, in a dynamic configuration manner, whether a next PDSCH is retransmission of data. For example, first indication information carried on the PDCCH indicates whether the next PDSCH is retransmission of data, so that the terminal apparatus can determine, based on information indicated by the PDCCH, whether data retransmission ends. This solution can implement flexible switching between retransmission and non-retransmission.

In a possible implementation, the second information includes at least one bit value, where the at least one bit value indicates existence of the $(i+1)^{th}$ transmission of the first data. In this solution, a relatively small quantity of bits are occupied, and signaling overheads are not increased.

In a possible implementation, the second information includes at least one of the following: indication information of a first preset control resource set (control resource set, CORESET) index; indication information of a first preset search space index; indication information of a first preset demodulation reference signal (demodulation reference signal, DMRS) scrambling code; indication information of a first preset cell reference signal (cell reference signal, CRS) scrambling code; or indication information of a first preset channel state information (channel state information, CSI) report. Implicit indication can reduce signaling overheads.

In a possible implementation, the terminal apparatus receives the first data in the $(i+1)^{th}$ transmission. The terminal apparatus receives third information. The third information indicates non-existence of an $(i+2)^{th}$ transmission of the first data. In this way, the terminal apparatus can identify that subsequent transmission is transmission of new data.

**According to a fourth aspect,** this application provides a communication method. The method is performed by a network apparatus. The network apparatus may be a network device, or may be a unit, a module, or a chip in a network device.

In the method, the network apparatus sends first data in an $i^{th}$ transmission. Herein, $i$ is a positive integer less than or equal to $N_0$, $N_0$ is a quantity of transmissions of the first data, and $N_0$ is a positive integer greater than 1. The network apparatus sends second information. The second information indicates existence of an $(i+1)^{th}$ transmission of the first data. The network apparatus sends the first data in the $(i+1)^{th}$ transmission.

In a possible implementation, the network apparatus sends the first data in the $(i+1)^{th}$ transmission. The network apparatus sends third information. The third information indicates non-existence of an $(i+2)^{th}$ transmission of the first data.

For beneficial effects of the fourth aspect and the possible implementations of the fourth aspect, and related content in the second information, refer to the descriptions in the third aspect and the possible implementations of the third aspect. Details are not described again.

**According to a fifth aspect,** a communication apparatus is provided. The communication apparatus may be the foregoing terminal apparatus or network apparatus. The communication apparatus may include a communication unit and a processing unit, to perform any one of the first aspect to the fourth aspect, or perform any one of the possible implementations of the first aspect to the fourth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the fourth aspect, or perform any one of the possible implementations of the first aspect to the fourth aspect.

**According to a sixth aspect,** a communication apparatus is provided. The communication apparatus may be the foregoing terminal apparatus or network apparatus. The communication apparatus may include a processor and a memory, to perform any one of the first aspect to the fourth aspect, or perform any one of the possible implementations of the first aspect to the fourth aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is caused to perform any one of the first aspect to the fourth aspect, or perform any one of the possible implementations of the first aspect to the fourth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

**According to a seventh aspect,** a communication apparatus is provided. The communication apparatus may be the foregoing terminal apparatus or network apparatus. The communication apparatus may include a processor, to perform any one of the first aspect to the fourth aspect, or perform any one of the possible implementations of the first aspect to the fourth aspect. The processor is coupled to a memory. Optionally, the communication apparatus further includes the memory. Optionally, the communication apparatus further includes a communication interface, and the processor is coupled to the communication interface.

In an implementation, when the communication apparatus is the terminal apparatus or the network apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

**According to an eighth aspect,** a system is provided. The system includes the foregoing terminal apparatus.

In a possible implementation, the system may further include a network apparatus.

**According to a ninth aspect,** a computer program product is provided. The computer program product includes a computer program (which may also be referred to as code or instructions). When the computer program is run, a computer is caused to perform any one of the first aspect to the fourth aspect, or perform any one of the possible implementations of the first aspect to the fourth aspect.

**According to a tenth aspect,** a computer-readable storage medium is provided. The computer-readable medium stores a computer program (which may also be referred to as code or instructions). When the computer program is run on a computer, the computer is caused to perform any one of the first aspect to the fourth aspect, or perform any one of the possible implementations of the first aspect to the fourth aspect.

**According to an eleventh aspect,** a processing apparatus is provided, and includes an interface circuit and a processing circuit. The interface circuit may include an input circuit and an output circuit. The processing circuit is configured to: receive a signal through the input circuit, and transmit a signal through the output circuit, so that any one of the first aspect to the fourth aspect or any one of the possible implementations of the first aspect to the fourth aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a terminal apparatus or a network apparatus, the interface circuit may be a radio frequency processing chip in the terminal apparatus or the network apparatus, and the processing circuit may be a baseband processing chip in the terminal apparatus or the network apparatus.

In another implementation, the communication apparatus may be some components in the terminal apparatus or the network apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

BRIEF DESCRIPTION OF DRAWINGS

FIG. 1 is a diagram of an architecture of a communication system to which an embodiment of this application is applied;
FIG. 2 is a diagram of a network architecture of another communication system to which an embodiment of this application is applicable;
FIG. 3 is a diagram of a network architecture of still another communication system to which an embodiment of this application is applicable;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a diagram of a communication apparatus according to an embodiment of this application; and
FIG. 10 is a diagram of another communication apparatus according to an embodiment of this application.

DESCRIPTION OF EMBODIMENTS

The technical solutions in embodiments of this application may be applied to various communication systems, for example, a terrestrial communication system and an NTN communication system such as a satellite communication system. The satellite communication system may be integrated with a mobile communication system. For example, the mobile communication system may be a $4^{th}$ generation (4th Generation, 4G) communication system (for example, a long term evolution (long term evolution, LTE) system), a worldwide interoperability for microwave access (worldwide interoperability for microwave access, WiMAX) communication system, a 5th generation (5th Generation, 5G) communication system (for example, a new radio (new radio, NR) system), and a future mobile communication system. The mobile communication system may alternatively be a vehicle to everything (vehicle to everything, V2X) system or an internet of things (internet of things, IoT) system.

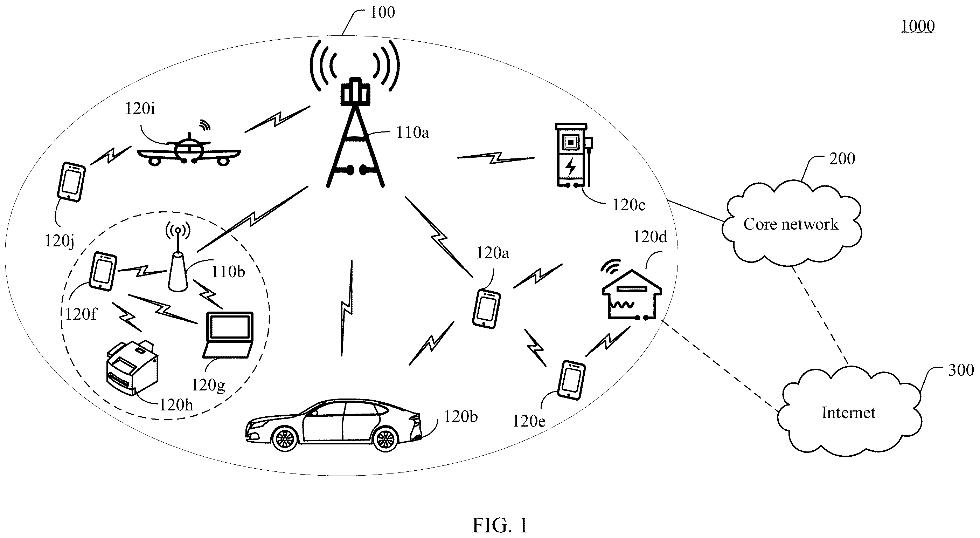

In an example, FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner and RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP), or may be a Wi-Fi system. The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to receive and send radio frequency signals. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which the base station is used as a RAN node.

The terminal is a device having wireless transmission and reception functions, and may send a signal to the base station or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with wireless transmission and reception functions, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having functions of a base station, and 120a to 120j in FIG. 1 each may be referred to as a communication apparatus having functions of a terminal.

Communication between the base station and the terminal, between base stations, and between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell to which the terminal establishes the wireless connection is referred to as a serving cell of the terminal. When communicating with the serving cell, the terminal is further interfered by a signal from a neighboring cell.

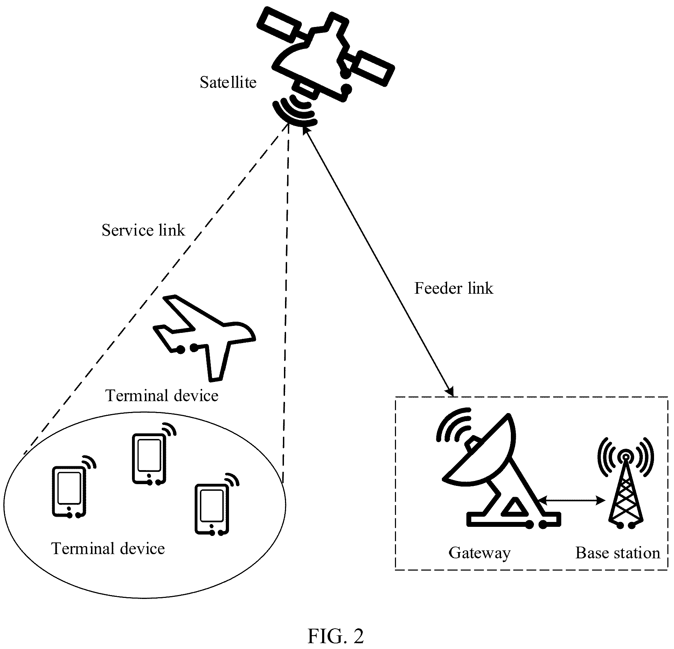

In another example, FIG. 2 is a diagram of a network architecture of another communication system to which an embodiment of this application is applicable. The communication system includes a satellite, a terminal device, and a gateway. The satellite may be a highly elliptical orbit (highly elliptical orbit, HEO) satellite, a geostationary earth orbit (geosynchronous earth orbit, GEO) satellite, a medium earth orbit (medium earth orbit, MEO) satellite, and a low-earth orbit (low-earth orbit, LEO) satellite. In addition, an NTN system may further include a high-altitude platform station (high-altitude platform station, HAPS) and the like. This is not limited herein. The gateway (gateway) (or referred to as a terrestrial station, an earth station, a signal gateway station, or a gateway station) may be used to connect the satellite and a terrestrial base station gateway station/signal gateway station (gateway). One or more satellites may be connected to one or more terrestrial base stations through one or more gateways. This is not limited herein. The terminal device includes, for example, a mobile phone, an airplane, and the like (which is used as an example in FIG. 2). A link between the satellite and the terminal device is referred to as a service link (service link), and a link between the satellite and the gateway is referred to as a feeder link (feeder link).

An operation mode of the satellite is not limited in embodiments of this application. For example, the operation mode of the satellite may be a transparent (transparent) mode, or may be a regenerative (regenerative) mode.

In the transparent transmission mode, the satellite, as an analog radio frequency repeater, has a relay forwarding function, can implement radio frequency conversion and amplification, and can transparently transmit or replicate a signal between the base station and the terminal device. For example, a signal sent by the terminal device may be transparently transmitted via the satellite and forwarded by the gateway to the terrestrial base station. The gateway has a part or all of functions of the base station. In this case, the gateway may be considered as a base station. It may be considered that a network element and the base station may be deployed together or separately. If the gateway and the base station are separately deployed, a delay of the feeder link includes a delay from the satellite to the gateway and a delay from the gateway to the base station.

In the regenerative mode, the satellite, as a base station for wireless communication, has a part or all of functions of the base station, implements regeneration of signals received from the ground, and may understand and process these signals. For example, the satellite may be a base station mounted on an artificial earth satellite or a high-altitude aircraft. For example, the base station may be an evolved NodeB (eNB) or a 5G base station (gNB). The gateway may forward signaling between the satellite (namely, the base station) and a core network.

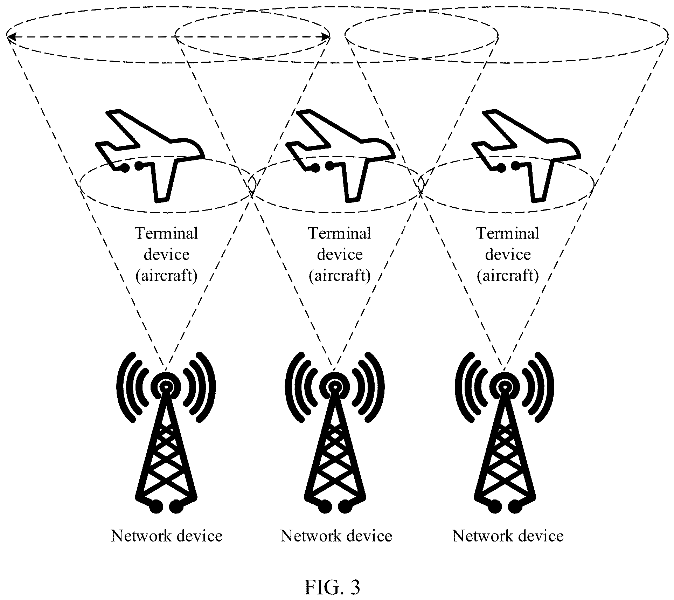

It may be understood that embodiments of this application are also applicable to an air-to-ground (air-to-ground, ATG) communication system. In an example, FIG. 3 is a diagram of a network architecture of still another communication system to which an embodiment of this application is applicable. The communication system includes at least one network device and at least one high-altitude terminal device. The high-altitude terminal device includes, for example, a high-altitude aircraft and an on-board terminal device.

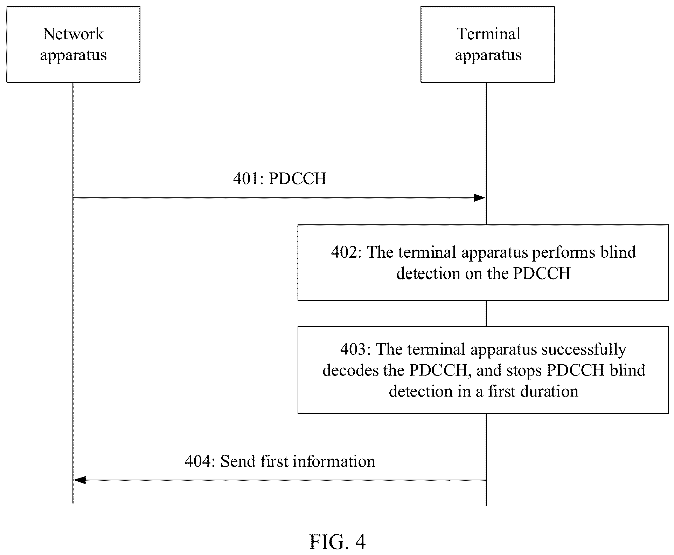

Based on the embodiments shown in FIG. 1, FIG. 2, and FIG. 3 and the foregoing other content, FIG. 4 is an example of a schematic flowchart of a communication method according to an embodiment of this application.

For ease of understanding, FIG. 4 is described from a perspective of interaction between apparatuses. A terminal apparatus related in FIG. 4 may be the terminal in FIG. 1, FIG. 2, or FIG. 3, or may be a chip system in the terminal. A network apparatus may be a network device or a chip system in a network device.

As shown in FIG. 4, the method includes the following steps.

**Step 401:** The network apparatus sends a PDCCH.

**Step 402:** The terminal apparatus performs blind detection on the PDCCH.

The PDCCH is used to schedule first data in an $i^{th}$ transmission. Herein, i is a positive integer less than or equal to $N_0$. In this embodiment of this application, sorting of a quantity of times is defined from a $1^{st}$ time. In this embodiment of this application, an example in which a value of i is a positive integer is used for description. In actual application, an initial time may also be referred to as a $0^{th}$ time. In other words, sorting of a quantity of times is defined from the $0^{th}$ time. In this case, a value of i in this embodiment of this application is 0 or a positive integer, and i is a positive integer less than or equal to n. When sorting of the quantity of times starts from the $0^{th}$ time, a related solution is similar to the solution described in this embodiment of this application. Details are not described again. In this embodiment of this application, the first data scheduled by using the PDCCH is used as an example for description. If the PDCCH is further used to schedule other data, reference may be made to a related solution of the first data for a solution of the other scheduled data. Details are not described again.

Herein, $N_0$ is a positive integer greater than 1, and $N_0$ is a quantity of allowed transmissions of the first data, or may be understood as a maximum quantity of allowed retransmissions. $N_0$ may also be understood as a maximum quantity of retransmissions of the first data. In this embodiment of this application, an example in which $N_0$ is the maximum quantity of retransmissions of the first data is used for description. An actual quantity of transmissions of the first data may be less than $N_0$ or equal to $N_0$. A value of $N_0$ may be preset, or may be configured by the network apparatus.

In this embodiment of this application, the first data may be uplink data, or may be downlink data. For example, the first data is data carried on a PDSCH or data carried on a PUSCH. The PDCCH may include information indicating the $i^{th}$ transmission. For example, the PDCCH may include resource information of data that is transmitted on the PDSCH and that is scheduled by using the PDCCH, and modulation and coding information of downlink data; or may include resource information of data that is transmitted by using the PUSCH and that is scheduled by using the PDCCH, modulation and coding information of uplink data transmission, and the like.

The first data may be sent once or repeatedly sent a plurality of times. The parameter $N_0$ configured in this embodiment of this application indicates a total quantity of transmissions of the first data. In this embodiment of this application, the retransmitted first data may be used for operations such as joint decoding and soft combination, thereby improving decoding performance of a receive end (a terminal apparatus or a network apparatus).

The first data in this embodiment of this application may be obtained by encoding source information. A plurality of pieces of retransmitted first data (for example, the first data in the $i^{th}$ transmission and the first data in the $(i+1)^{th}$ transmission) correspond to same source information, and a same encoding manner or different encoding manners. It may also be understood that a plurality of pieces of encoded data corresponding to the plurality of pieces of retransmitted first data may be the same or may be different (for example, the encoded data corresponding to the plurality of pieces of retransmitted first data respectively belongs to different redundancy versions (redundancy version, RV)).

**Step 403:** After successfully decoding the PDCCH, the terminal apparatus stops PDCCH blind detection in a first duration.

**Step 404:** The terminal apparatus sends first information.

In this embodiment of this application, after successfully decoding the PDCCH, the terminal apparatus may perform two steps: stopping PDCCH blind detection in the first duration, and sending the first information. The two steps may not be performed in sequence.

In this embodiment of this application, after successfully decoding the PDCCH, the terminal apparatus may stop PDCCH blind detection in a specific time period (or a duration), to reduce power consumption of the terminal apparatus.

In a possible implementation, in some scenarios in which a transmission delay is relatively large, for example, in an NTN, a relatively long delay may be taken for first information sent by the terminal apparatus after the terminal apparatus successfully decodes a PDCCH (or a PDSCH) to reach the network apparatus. Before receiving the first information, the network apparatus may consider that the terminal apparatus fails to decode the PDCCH (or the PDSCH). Therefore, the network apparatus may schedule retransmission of the first data by using one or more PDCCHs. However, for the terminal apparatus, the terminal apparatus has successfully decoded the PDCCH (or the PDSCH). Therefore, PDCCH blind detection may not be performed on the PDCCH that is subsequently used to schedule retransmission of the first data, thereby reducing power consumption of the terminal apparatus.

In a possible implementation, the terminal apparatus resumes PDCCH blind detection after the first duration. In this way, it can be avoided that the terminal apparatus misses transmission of new data.

In this embodiment of this application, the first data may be uplink data, or may be downlink data. The following separately uses Implementation A1 and Implementation A2 for description. In Implementation A1, the first data is downlink data. In Implementation A2, the first data is uplink data.

**Implementation A1:** The first data is downlink data.

In Implementation A1, the network apparatus may send one or more PDCCHs. One PDCCH may be used to schedule one downlink transmission of the first data. The first data may include downlink data carried on a PDSCH. For example, the first data is data carried on the PDSCH.

After successfully decoding a PDCCH, the terminal apparatus may decode, based on obtained information, first data (for example, a PDSCH) scheduled by using the PDCCH. The decoding may be successful or unsuccessful. After successfully decoding the first data (for example, the PDSCH) scheduled by using the PDCCH, the terminal apparatus sends an ACK. When the terminal apparatus fails in decoding the first data (for example, the PDSCH) scheduled by using the PDCCH, the terminal apparatus may send or not send feedback information (for example, a negative acknowledgment character (negative acknowledgment, NACK)). The first information reported by the terminal apparatus may include information indicating that the first data (for example, the data carried on the PDSCH) scheduled by using the PDCCH is successfully decoded (for example, the first information is an ACK) or unsuccessfully decoded (for example, the first information is a NACK). In Implementation A1, the first information may also be referred to as feedback information.

After the network apparatus receives the ACK, the network apparatus may determine that the terminal apparatus has successfully received the first data. Therefore, subsequent retransmission of the first data may be stopped, thereby reducing resource overheads. If the network apparatus has not received the ACK (for example, the network apparatus has not received the feedback information or has received the NACK), the network apparatus may retransmit the first data, to increase probability that the terminal apparatus successfully receives the first data. In this embodiment of this application, retransmission may be written as repetition or re-transmission in English.

The terminal apparatus may send the first information once, or may send the first information a plurality of times. For example, the terminal apparatus sends the first information on a first resource, and the first resource may include a feedback resource of the first data in the $i^{th}$ transmission. In this embodiment of this application, one downlink transmission may correspond to one uplink feedback resource, or a plurality of downlink transmissions may correspond to one uplink feedback resource. An example in which one downlink transmission corresponds to one uplink feedback resource is used for description in this embodiment of this application. For another example, the terminal apparatus sends the first information on a second resource, and the second resource includes a feedback resource of the first data in the $(i+a)^{th}$ transmission. The first information includes information indicating that the first data is successfully decoded. Herein, a is a positive integer, and $(i+a)$ is less than or equal to $N_0$. The terminal apparatus sends the first information a plurality of times, to improve transmission reliability of the first information.

In another possible implementation, after successfully decoding the PDSCH, the terminal apparatus stops PDCCH blind detection in the first duration. A time domain resource occupied by the first duration includes the second resource. For example, in the time domain resource occupied by the first duration, the terminal apparatus may avoid three times of PDCCH blind detection, and the terminal apparatus may retransmit the first information on feedback resources of PDSCHs corresponding to the three times of PDCCH blind detection, to improve reliability of the first information.

To reflect a difference, a plurality of communication systems are involved in subsequent descriptions of embodiments of this application, and may be referred to as a first communication system and a second communication system in embodiments of this application. A data transmission delay in the first communication system is greater than a data transmission delay in the second communication system. The first communication system may also be referred to as a large-delay communication system. For ease of understanding, subsequent content is described by using an example in which the first communication system is an NTN and the second communication system is a terrestrial communication system. The NTN related in embodiments of this application may be replaced with the first communication system, and the terrestrial communication system may be replaced with the second communication system. The first communication system and the second communication system in embodiments of this application may alternatively be other communication systems, for example, an air-to-ground (air to ground, ATG) communication system or a cellular cell communication system. This is not limited in embodiments of this application.

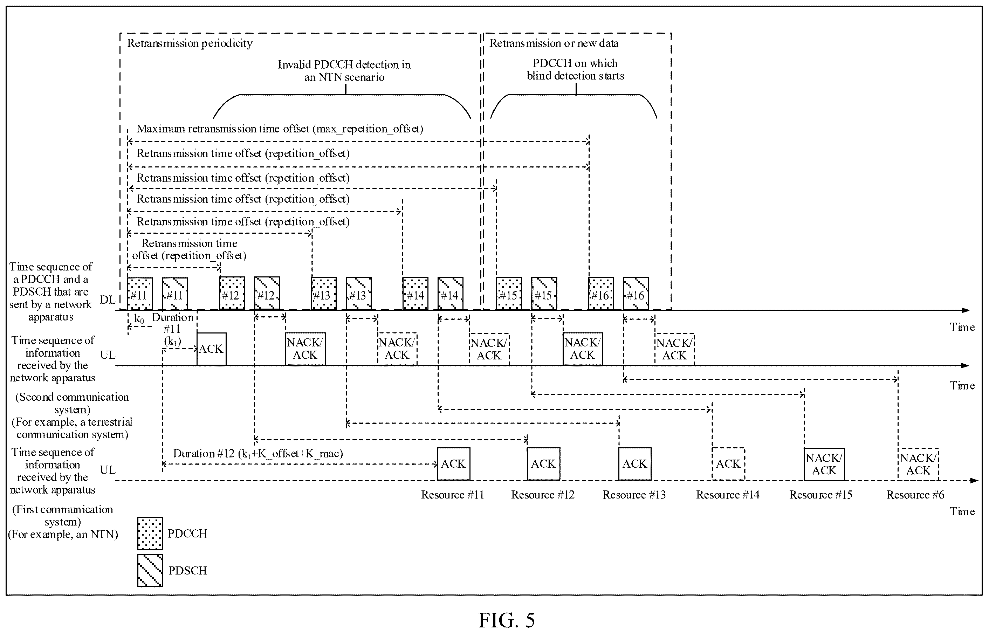

FIG. 5 is an example of a schematic flowchart of a communication method.

FIG. 5 is shown by using a scenario, as an example, in which a network apparatus sends downlink data. FIG. 5 shows an example of a time sequence relationship of various pieces of data. DL may be understood as a short term of downlink (downlink, DL). Pieces of data on the DL may reflect a time sequence relationship of downlink data. UL may be understood as a short term of uplink (uplink, UL). Pieces of data on the UL in a second communication system (for example, a terrestrial communication system) and a first communication system (for example, an NTN) reflect a time sequence relationship of uplink data. Subsequent content is described by using an example in which the second communication system is a terrestrial communication system and the first communication system is an NTN. On a time coordinate axis, a data block that is farther away from an arrow of the coordinate axis is sent earlier, and a data block that is closer to the arrow of the coordinate axis is sent later.

The network apparatus schedules transmission of a PDSCH by using a PDCCH. As shown in FIG. 5, it is assumed that a maximum quantity of retransmissions is 6. In this case, the network apparatus may send PDCCHs six times. The PDCCHs are respectively a PDCCH #11, a PDCCH #12, a PDCCH #13, a PDCCH #14, a PDCCH #15, and a PDCCH #16. The six PDCCHs are chronologically sequentially arranged. The network apparatus first sends the PDCCH #11, and finally sends the PDCCH #16. The six PDCCHs are used to schedule a PDSCH. For example, the PDCCH #11 is used to schedule transmission of a PDSCH #11, the PDCCH #12 is used to schedule transmission of a PDSCH #12, the PDCCH #13 is used to schedule transmission of a PDSCH #13, the PDCCH #14 is used to schedule transmission of a PDSCH #14, the PDCCH #15 is used to schedule transmission of a PDSCH #15, and the PDCCH #16 is used to schedule transmission of a PDSCH #16.

In this embodiment of this application, a terminal apparatus in the terrestrial communication system and a terminal apparatus in the NTN may be a same terminal apparatus, or may be two terminal apparatuses. The terminal apparatus in the terrestrial communication system related in this embodiment of this application means that the terminal apparatus performs communication based on an apparatus in the terrestrial communication system. The terminal apparatus in the NTN related in this embodiment of this application means that the terminal apparatus performs communication based on an apparatus in the NTN.

FIG. 5 is illustrated by using an example in which the terminal apparatus is UE. The UE in the example provided in this embodiment of this application may be replaced with a terminal apparatus. Feedback information in this example may be considered as a possible example of the foregoing first information. A resource used to send the feedback information may be considered as an example of the first resource (or referred to as a feedback resource). For example, as shown in FIG. 5, in an NTN, the UE may send feedback information separately on a plurality of resources (for example, a resource #11, a resource #12, a resource #13, a resource #14, a resource #15, and a resource #16). The feedback information sent by the UE on these resources may be an ACK, or may be a NACK. In FIG. 5, the following example is used for presentation: In a terrestrial communication system, a 1st piece of feedback information is an ACK, and the other pieces of feedback information are NACKs or ACKs; and in the NTN, the first four pieces of feedback information are ACKs, and the other pieces of feedback information are NACKs or ACKs.

A duration #11 in FIG. 5 may be a duration, a delay, a time difference, a timing difference, or a time length difference between sending a PDSCH (for example, a PDSCH #11) by a network apparatus (for example, a terrestrial base station) in the terrestrial communication system, and receiving feedback information (for example, an ACK) from UE in the terrestrial communication system by the network apparatus in the terrestrial communication system. A duration #11 may alternatively be a duration, a delay, a time difference, a timing difference, or a time length difference between a network apparatus (for example, a terrestrial base station) in the terrestrial communication system sending data carried on a downlink PDSCH scheduled by using a PDCCH (for example, a PDCCH #11), and receiving feedback information (for example, an ACK) from UE in the terrestrial communication system by the network apparatus in the terrestrial communication system. A duration #12 in FIG. 5 may be a duration, a delay, a time difference, a timing difference, or a time length difference between a network apparatus (for example, a satellite base station) in the NTN sending data carried on a PDSCH (for example, a PDSCH #11) and the network apparatus in the NTN receiving feedback information (for example, an ACK) from UE in the NTN. The duration #11 may not be greater than 2 milliseconds, and the duration #12 may reach 2 milliseconds to 541.46 milliseconds. In this embodiment of this application, the network apparatus may be different devices in different communication systems. For ease of comparison, the network apparatus shown in FIG. 5 may be considered as a network apparatus in the terrestrial communication system or the NTN. For ease of understanding, FIG. 5 is described by using an example in which the network apparatus in the terrestrial communication system is a terrestrial base station and the network apparatus in the NTN is a satellite base station. Both the terrestrial base station and the satellite base station in this application may be replaced with network apparatuses.

With reference to FIG. 5, in the terrestrial communication system, because a round-trip delay of signal transmission between a terrestrial base station and UE is relatively small, after completing sending of a PDCCH (for example, the PDCCH #11) and a PDSCH (for example, the PDSCH #11), the terrestrial base station may receive, after a relatively short time interval (the duration #11), feedback information (for example, the ACK in FIG. 5) sent by the UE. If the terrestrial base station receives the ACK, subsequent retransmission of the same data may be stopped after the ACK is received. For example, the terrestrial base station initially transmits first data by using the PDSCH #11. If an ACK is received, a PDSCH #12, a PDSCH #13, a PDSCH #14, a PDSCH #15, and a PDSCH #16 may no longer be used to retransmit the first data subsequently, and may be used to transmit other new data, thereby saving resources.

In the NTN, because a distance between the satellite base station and the UE is relatively long, a round-trip delay (the duration #12) of signal transmission between the satellite base station and the UE is far greater than the duration #11.

After the satellite base station completes sending the PDCCH (for example, the PDCCH #11) and the PDSCH (for example, the PDSCH #11), the satellite base station can receive, after a long time interval (the duration #12), feedback information sent by the UE (for example, an ACK sent by the UE in the NTN in FIG. 5 on the resource #11).

It can be learned from the example in FIG. 5 that because the round-trip delay of signal transmission in the NTN is relatively large, when the satellite base station receives the ACK sent by the UE in the NTN on the resource #11, the satellite base station has sent the PDSCH #12, the PDSCH #13, and the PDSCH #14. Because the satellite base station has not received an ACK when sending the PDSCH #12, the PDSCH #13, and the PDSCH #14, the satellite base station retransmits, by using the PDSCH #12, the PDSCH #13, and the PDSCH #14, the data (for example, the first data) transmitted by the PDSCH #11.

However, after the UE feeds back the ACK, the UE considers that data subsequently scheduled by the base station by using the PDCCH (for example, the PDSCH #12 scheduled by using the PDCCH #12) is new data. Therefore, the UE continues to decode the PDCCH (for example, the PDCCH #12). Similarly, if the UE successfully decodes the PDCCH #12 and the PDSCH #12, the UE still feeds back an ACK, and then the UE considers that data subsequently scheduled by using the PDCCH #13 is new data, and then performs blind detection on the PDCCH #13. Similarly, the UE also performs blind detection on the PDCCH #14. In this solution, decoding performed by the UE on a subsequent PDCCH (for example, the PDSCH #12, the PDSCH #13, and the PDSCH #14) is invalid (because the PDSCH #12, the PDSCH #13, and the PDSCH #14 are all retransmitted data of the PDSCH #11). Therefore, computing resources and power of the UE are wasted.

For the foregoing problem, in the solution provided in this embodiment of this application, after successfully decoding the PDCCH #11 and successfully decoding the PDSCH #11 scheduled by using the PDCCH #11, the UE may stop PDCCH blind detection in a first duration (the first duration may include a duration in which the UE receives the PDSCH #12, the PDSCH #13, and the PDSCH #14, and the UE may avoid blind detection on the PDCCH #12, the PDCCH #13, and the PDCCH #14 in the first duration). Therefore, computing resources and power of the UE can be saved.

In another possible implementation, the UE may resume PDCCH blind detection after the first duration. With reference to FIG. 5, for example, after the first duration, the UE may resume blind detection on the PDCCH #15. The network apparatus may retransmit data on the PDSCH #11 through the PDSCH #15 scheduled by using the PDCCH #15. The network apparatus may retransmit data on the PDSCH #15 through the PDSCH #16 scheduled by using the PDCCH #16, or the network apparatus may transmit new data through the PDSCH #16 scheduled by using the PDCCH #16.

Alternatively, after the network apparatus sends the PDCCH #14 and before the network apparatus sends the PDCCH #15, the network apparatus receives the ACK sent by the UE on the resource #11. Therefore, the network apparatus may also schedule the PDSCH #15 by using the PDCCH #15 to transmit new data. Because the UE resumes blind detection on the PDCCH #15, the UE can avoid missing the new data scheduled by the network apparatus by using the PDCCH #15. The network apparatus may retransmit the data on the PDSCH #15 on the PDSCH #16 scheduled by using the PDCCH #16 (for this solution, refer to the foregoing related description of the PDCCH #12, and details are not described again).

Still with reference to FIG. 5, as shown in FIG. 5, after feeding back the ACK on the resource #11, the UE may stop PDCCH blind detection in the first duration. The time domain resource occupied by the first duration in FIG. 5 includes time domain resources corresponding to the resource #11 to the resource #14. It may also be understood that the PDCCH #12, the PDCCH #13, and the PDCCH #14 are invalidly detected PDCCHs in an NTN scenario. The UE stops PDCCH blind detection in the first duration, to avoid blind detection on the PDCCH #12, the PDCCH #13, and the PDCCH #14, thereby reducing power consumption of the UE. In addition, although the UE stops PDCCH detection on the time domain resource occupied by the first duration, the UE may send the first information (for example, the ACK) one or more times in the first duration. For example, the UE may send the first information (for example, the ACK) on the resource #11. The UE may not send the first information (for example, the ACK) on the resource #12, the resource #13, and the resource #14, or repeatedly send the first information (for example, the ACK) on a part or all of the resource #12, the resource #13, and the resource #14. The resource #11 in FIG. 5 may be considered as an example of the first resource related in this embodiment of this application, and the second resource related in this embodiment of this application may be any one of the resource #12, the resource #13, and the resource #14. For related content such as a retransmission time offset (repetition_offset), a maximum retransmission time offset (max_repetition_offset), $k_0$, and ($k_1$+K_offset+k_mac) in FIG. 5, refer to the following descriptions. Details are not described herein.

**Implementation A2:** The first data is uplink data.

In Implementation A2, the network apparatus may send one or more PDCCHs. One PDCCH may be used to schedule one or more uplink transmissions of the first data. The first data may include data carried on a PUSCH. For example, the first data is data carried on the PUSCH.

After successfully decoding one PDCCH, the terminal apparatus may determine, based on obtained information (with reference to other information, for example, a pattern of a resource location used for retransmitting the first data), a resource (for example, a time domain resource and/or a frequency domain resource) corresponding to uplink data scheduled by using a PDCCH, and then send the first data (for example, the first data carried on a PUSCH) in an $i^{th}$

transmission on the resource. In this example, the first information includes the first data in the $i^{th}$ transmission.

After the network apparatus receives the first data, the network apparatus may stop scheduling retransmission of the first data by using a PDCCH, and may schedule transmission of other new data by using a PDCCH, thereby reducing resource overheads. If the network apparatus has not received the first data, the network apparatus may further send a PDCCH, and schedule retransmission of the first data by using the PDCCH, so that the network apparatus successfully receives the first data.

The terminal apparatus may send the first information (for example, the first data) once, or may send the first information a plurality of times. For example, the terminal apparatus sends the first information (for example, the first data) on a first resource, and the first resource may include a resource of the first data in the $i^{th}$ transmission. For example, the terminal apparatus sends the first information (for example, the first data) on a second resource, and the second resource includes a resource of the first data in an $(i+a)^{th}$ transmission. Herein, a is a positive integer, and (i+a) is less than or equal to $N_0$. The terminal apparatus sends the first data a plurality of times, to improve transmission reliability of the first data.

In another possible implementation, after successfully decoding the PDCCH, the terminal apparatus stops PDCCH blind detection in the first duration. A time domain resource occupied by the first duration includes the second resource. For example, in the time domain resource occupied by the first duration, the terminal apparatus may avoid three times of PDCCH blind detection, and the terminal apparatus may retransmit the first data on uplink transmission resources corresponding to the three times of PDCCH blind detection, to improve reliability of the first data.

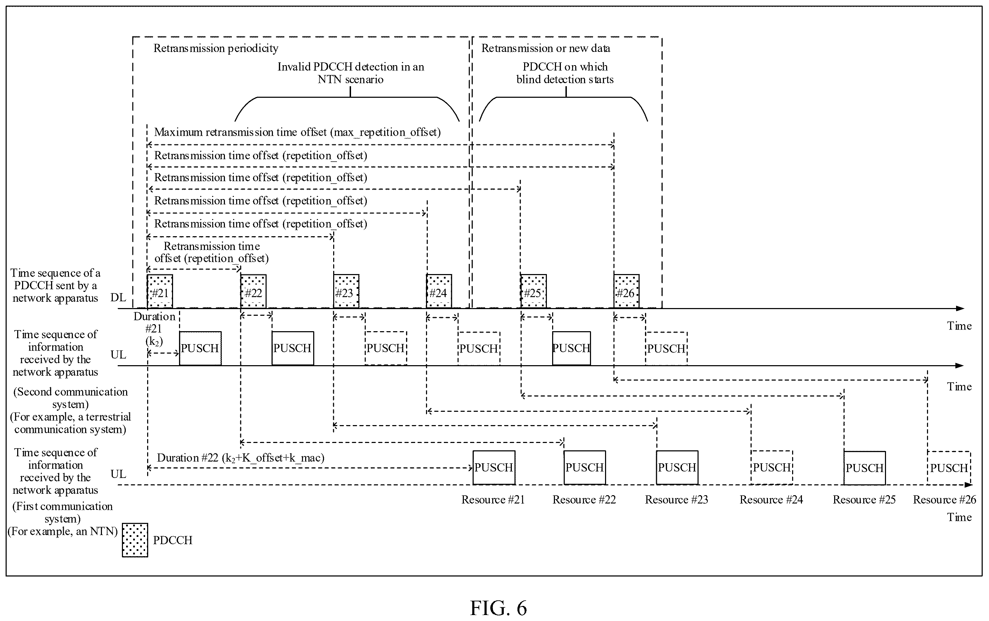

FIG. 6 is an example of a schematic flowchart of a communication method.

For related descriptions of FIG. 6, refer to the content in FIG. 5. A difference between FIG. 6 and FIG. 5 lies in that FIG. 6 is illustrated by using a scenario, as an example, in which a terminal apparatus sends uplink data.

The network apparatus schedules transmission of a PUSCH by using a PDCCH. As shown in FIG. 6, it is assumed that a maximum quantity of retransmissions is 6. PDCCHs (a PDCCH #21, a PDCCH #22, a PDCCH #23, a PDCCH #24, a PDCCH #25, and a PDCCH #26) sent by the network apparatus in six times each are used to schedule data carried on a PUSCH.

The PUSCH in FIG. 6 may be considered as a possible example of the foregoing first information. A resource used for sending a PUSCH may be considered as an example of a first resource.

A duration #21 in FIG. 6 is a duration, a delay, a time difference, a timing difference, or a time length difference between sending a PDDCH (for example, a PDDCH #21) by a network apparatus (for example, a terrestrial base station) in a terrestrial communication system (a second communication system), and receiving a PUSCH from UE in the terrestrial communication system by the network apparatus in the terrestrial communication system. The duration #21 may not be greater than 2 milliseconds, and the duration #22 may reach 2 milliseconds to 541.46 milliseconds. In this embodiment of this application, the network apparatus may be different devices in different communication systems. For ease of comparison, the network apparatus shown in FIG. 6 may be considered as a network apparatus in the terrestrial communication system or the NTN. For ease of understanding, FIG. 6 is described by using an example in which the network apparatus in the terrestrial communication system is a terrestrial base station and the network apparatus in the NTN is a satellite base station. Both the terrestrial base station and the satellite base station in this application may be replaced with network apparatuses.

With reference to FIG. 6, in the terrestrial communication system, because a round-trip delay of signal transmission between a terrestrial base station and UE is relatively small, after completing sending a PDCCH (for example, the PDCCH #21), the terrestrial base station may receive, after a relatively short time interval (the duration #21), first information (for example, first data carried on a PUSCH) sent by the UE. If the terrestrial base station receives the PUSCH, retransmission of the same data scheduled by using the PDCCH may be stopped after the PUSCH is received. If the terrestrial base station schedules transmission of the PUSCH by using the PDCCH #21 and successfully receives transmission of the PUSCH, the terrestrial base station does not need to subsequently schedule retransmission of the first data by using a subsequent PDCCH (for example, the PDCCH #22), where the PDCCH #22 may be used to schedule transmission of other new data, thereby saving resources. In this embodiment of this application, if data that is scheduled by using the PDCCH and that is received by the UE is the same as data scheduled by using a previous PDCCH, the UE may infer that the network apparatus has not successfully received a previous PUSCH. If data that is scheduled by using the PDCCH and that is received by the UE is different from data scheduled by using a previous PDCCH, the UE may infer that the network apparatus has successfully received a previous PUSCH.

In the NTN, because a distance between the satellite base station and the UE is relatively long, a round-trip delay (the duration #22) of signal transmission between the satellite base station and the UE is far greater than the duration #21. After the satellite base station completes sending a PDCCH (for example, the PDCCH #21), the satellite base station can receive, after a long time interval (the duration #22), a PUSCH sent by the UE.

It can be learned from the example in FIG. 6 that because the round-trip delay of signal transmission in the NTN is relatively large, when the satellite base station receives the PUSCH sent by the UE in the NTN on the resource #21, the satellite base station has sent the PDCCH #22, the PDCCH #23, and the PDCCH #24. Because the satellite base station has not received a PUSCH when sending the PDCCH #22, the PDCCH #23, and the PDCCH #24, the satellite base station retransmits, by using the PDCCH #22, the PDCCH #23, and the PDCCH #24, uplink data (for example, the first data) scheduled by using the PUSCH #21.

However, after the UE sends the PUSCH, the UE considers that data subsequently scheduled by the base station by using the PDCCH #22 is new data, and therefore the UE continues to perform blind detection on the PDCCH #22. Similarly, if the UE successfully decodes the PDCCH #22, the UE retransmits the uplink data (for example, the first data) scheduled by using the PUSCH #21, then the UE considers that data subsequently scheduled by using the PDCCH #23 is new data, and then performs blind detection on the PDCCH #23. Similarly, the UE also performs blind detection on the PDCCH #24. In this solution, decoding performed by the UE on a subsequent PDCCH (for example, the PDCCH/PUSCH #22, the PDCCH/PUSCH #23, and the PDCCH/PUSCH #24) is invalid (because the PUSCH #22, the PUSCH #23, and the PUSCH #24 are all retransmitted data of the PUSCH #21). Therefore, computing resources and power of the UE are wasted.

For the foregoing problem, in the solution provided in this embodiment of this application, when successfully decoding the PDCCH #21, the UE may stop PDCCH blind detection (for example, may stop blind detection on the PDCCH #22, the PDCCH #23, and the PDCCH #24) in the first duration, to save computing resources and power of the UE.

In another possible implementation, the UE may resume PDCCH blind detection after the first duration. With reference to FIG. 6, for example, after the first duration, the UE may resume blind detection on the PDCCH #25. The network apparatus may schedule data retransmission by using the PDCCH #25 (for example, retransmission of data scheduled by using the PDCCH #21). The network apparatus may schedule data retransmission by using the PDCCH #26 (for example, retransmission of data scheduled by using the PDCCH #21), or the network apparatus may schedule new data by using the PDCCH #26.

Alternatively, after the network apparatus sends the PDCCH #24 and before the network apparatus sends the PDCCH #25, the network apparatus successfully receives the PUSCH sent by the UE on the resource #21. Therefore, the network apparatus may also schedule the PUSCH #25 by using the PDCCH #25 to transmit new data. Because the UE resumes blind detection on the PDCCH #25, the UE may transmit new data on a resource of the PUSCH #25 scheduled by using the PDCCH #25. The network apparatus may retransmit (for this solution, refer to the foregoing related descriptions of the PDCCH #22, and details are not described again) data transmitted on the PUSCH #26 scheduled by using the PDCCH #26 (for example, data transmitted on the PUSCH #25 scheduled by using the PDCCH #25).

For example, the network apparatus may indicate, by using an NDI in a PDCCH, whether the PDCCH schedules a PUSCH to transmit new data, or schedules a PUSCH to transmit previous data (that is, retransmitted data). If the NDI in the PDCCH and that in a previous PDCCH carry a same bit, the UE needs to repeatedly send the data carried on the previous PUSCH. If the NDI in the PDCCH and that in the previous PDCCH carry different bits, the UE needs to send new data.

In another possible implementation, if the network apparatus transmits new data on the PUSCH #25 scheduled by using the PDCCH #25 and transmits the new data on the PUSCH #26 scheduled by using the PDCCH #26, that is, a base station schedules and sends the new data on last two retransmission resources, but the UE has not successfully decoded the PDCCH #25 and the PDCCH #26, the UE cannot determine whether the base station schedules and sends new data or retransmits data in the two transmissions. In this case, it may be agreed that a base station continues to send new data by using a new group of subsequent retransmission resources (similar to the six retransmission resources in the figure). The UE discards a previous group of two retransmission resources (because the UE cannot determine whether the data is retransmitted data or new data), and starts to receive data by directly using a latest group of retransmission resources (starts to receive initially transmitted data again).

Still with reference to FIG. 6, as shown in FIG. 6, after sending the PUSCH (for example, the PUSCH carries the first data) on the resource #21, the UE may stop PDCCH blind detection in the first duration. The time domain resource occupied by the first duration in FIG. 6 includes time domain resources corresponding to the resource #22 to the resource #24. It may also be understood that the PDCCH #22, the PDCCH #23, and the PDCCH #24 are invalidly detected PDCCHs in an NTN (a first communication system) scenario. The UE stops PDCCH blind detection in the first duration, to avoid blind detection on the PDCCH #22, the PDCCH #23, and the PDCCH #24, thereby reducing power consumption of the UE. In addition, although the UE stops PDCCH detection on the time domain resource occupied by the first duration, the UE may send the first information (for example, the first data) one or more times in the first duration. For example, the UE may send the first information (for example, the first data) on the resource #21. The UE may not send the first information (for example, the first data) on the resource #22, the resource #23, and the resource #24, or repeatedly send the first information (for example, the first data) on a part or all of the resource #22, the resource #23, and the resource #24. The resource #21 in FIG. 6 may be considered as an example of the first resource related in this embodiment of this application, and the second resource related in this embodiment of this application may be any one of the resource #22, the resource #23, and the resource #24. For related content such as a retransmission time offset (repetition_offset), a maximum retransmission time offset (max_repetition_offset), and ($k_2$+K_offset+k_mac) in FIG. 6, refer to the following descriptions. Details are not described herein.

In a possible implementation, the first duration may include a corresponding duration from an $(i+1)^{th}$ transmission of the first data to an $(i+k)^{th}$ transmission of the first data, where k is a positive integer. In a possible implementation, the first duration may alternatively include a corresponding duration between a PDCCH used to schedule the $(i+1)^{th}$ transmission of the first data and a PDCCH used to schedule the $(i+k)^{th}$ transmission of the first data. The first duration may also be understood as a corresponding duration from transmission of a $1^{st}$ PDCCH to transmission of a $k^{th}$ PDCCH after the terminal apparatus successfully decodes the PDCCH. In a possible implementation, after successfully decoding the PDCCH, the terminal apparatus stops blind detection on the $1^{st}$ PDCCH to the $k^{th}$ PDCCH that are subsequently received. The terminal apparatus may resume PDCCH blind detection for the $(k+1)^{th}$ PDCCH.

In this embodiment of this application, a start point of the first duration may be considered as a moment at which the terminal apparatus successfully decodes the PDCCH or a moment after the moment at which the terminal apparatus successfully decodes the PDCCH. For example, the start point of the first duration may also be considered as a moment at which the terminal apparatus successfully decodes the PDSCH scheduled by using the PDCCH or a moment after the moment at which the terminal apparatus successfully decodes the PDSCH scheduled by using the PDCCH. For another example, the start point of the first duration may alternatively be considered as a time corresponding to a start of a next PDCCH time domain resource after the terminal apparatus successfully decodes the PDCCH.

Information used for determining the first duration includes one or more parameters, for example, includes at least one of the following parameters: a parameter B1, a parameter B2, a parameter B3, a parameter B4, a parameter B5, a parameter B6, a parameter B7, a parameter B8, a parameter B9, a parameter B10, a parameter B11, a parameter B12, a parameter B13, or a parameter B14. Names of the parameters in embodiments of this application may be replaced, and the names provided in embodiments of this application are examples.

**Parameter B1:** maximum quantity ($N_0$) of retransmissions of the first data

$N_0$ may also be referred to as the maximum quantity of retransmissions of the first data. For ease of understanding, the maximum quantity of retransmissions of the first data may also be written as the maximum quantity of retransmissions ($N_0$) of the first data. For related content of $N_0$, refer to the foregoing descriptions. Details are not described again.

**Parameter B2:** maximum retransmission time offset (max_repetition_offset)

The maximum retransmission time offset (max_repetition_offset) may be replaced with a duration corresponding to $N_0$ transmissions of the first data. The duration corresponding to the $N_0$ transmissions of the first data may include a duration occupied by $N_0$ PDCCH or PDSCH transmissions. $N_0$ PDCCHs may be PDCCHs used to schedule the $N_0$ transmissions of the first data. The $N_0$ PDSCHs may be $N_0$ PDSCHs carrying the first data.

With reference to FIG. 5, if the maximum quantity of retransmissions of the first data is 6, in a possible example, the maximum retransmission time offset (max_repetition_offset) may be from a start transmission time of the PDCCH #11 (or the PDSCH #11) to a start transmission time of the PDCCH #16 (or the PDSCH #16) (with reference to the maximum retransmission time offset (max_repetition_offset) shown in FIG. 5). In another possible example, the maximum retransmission time offset (max_repetition_offset) may be from an end transmission time of the PDCCH #11 (or the PDSCH #11) to an end transmission time of the PDCCH #16 (or the PDSCH #16).

With reference to FIG. 6, if the maximum quantity of retransmissions of the first data is 6, in a possible example, the maximum retransmission time offset (max_repetition_offset) may be from a start (or end) transmission time of the PDCCH #21 to a start (or end) transmission time of the PDCCH #26 (with reference to the maximum retransmission time offset (max_repetition_offset) shown in FIG. 6).

**Parameter B3:** retransmission time interval (repetition interval)

The retransmission time interval (repetition interval) may also be understood as two adjacent transmissions of the first data, for example, initial transmission of the first data and retransmission of the first data adjacent to the initial transmission, or two adjacent retransmissions of the first data. In this embodiment of this application, the retransmission time interval (repetition interval) may alternatively be a time interval between two adjacent PDCCHs.

In this embodiment of this application, time intervals between any two adjacent transmissions of the first data may be equal or unequal. When the time intervals between any two adjacent transmissions of the first data are equal, the parameter B3 may include a value of one time interval. When the time intervals between any two adjacent transmissions of the first data are unequal, the parameter B3 may include values of a plurality of time intervals, and the parameter B3 may further include information about a quantity of transmissions corresponding to each time interval, so that the terminal apparatus determines a time interval between two transmissions based on the information.

In this embodiment of this application, the network apparatus and the terminal apparatus may agree on or configure a start location of a retransmission periodicity. With reference to FIG. 5 or FIG. 6, description is provided by using an example in which FIG. 5 or FIG. 6 includes one initial PDCCH transmission and five PDCCH retransmissions. The network apparatus and the terminal apparatus may agree that start locations of the five PDCCH retransmissions in FIG. 5 or FIG. 6 are frames satisfying $\text{mod}(FN, 5)=0$, where FN represents a frame number (frame number, FN). Alternatively, the network apparatus and the terminal apparatus may agree that start locations of the five PDCCH retransmissions are slots satisfying $\text{mod}(slot\_number, 5)=0$, where slot_number represents a slot number (slot number). In a possible implementation, the retransmission periodicity may be defined as a product of the maximum quantity of retransmissions and the retransmission time interval (repetition interval).

**Parameter B4:** retransmission time offset (repetition_offset)

When the first data is downlink data, the retransmission time offset (repetition_offset) of the PDCCH in this embodiment of this application is a time interval starting from a PDCCH/PDSCH corresponding to an uplink feedback resource used by the terminal apparatus to send an ACK (the first information) for a first time to a current PDCCH/PDSCH. The retransmission time offset (repetition_offset) in this embodiment of this application may have another name. This is not limited in this embodiment of this application.

With reference to FIG. 5, transmission of the first data on the PDSCH #11 scheduled by using the PDCCH #11 is initial transmission. The PDCCH #12, the PDCCH #13, the PDCCH #14, the PDCCH #15, and the PDCCH #16 are configured as PDCCHs used to retransmit the first data. If the terminal apparatus successfully decodes the PDCCH #11 and the PDSCH #11 and feeds back an ACK, in this case, a retransmission time offset (repetition_offset) corresponding to the PDCCH #12 may be a duration of an interval between the PDCCH #12 (or the PDSCH #12) and the PDCCH #11 (or the PDSCH #11). Similarly, a retransmission time offset (repetition_offset) corresponding to the PDCCH #13 may be a duration of an interval between the PDCCH #13 (or the PDSCH #13) and the PDCCH #11 (or the PDSCH #11). A retransmission time offset (repetition_offset) corresponding to the PDCCH #14 may be a duration of an interval between the PDCCH #14 (or the PDSCH #14) and the PDCCH #11 (or the PDSCH #11). A retransmission time offset (repetition_offset) corresponding to the PDCCH #15 may be a duration of an interval between the PDCCH #15 (or the PDSCH #15) and the PDCCH #11 (or the PDSCH #11). A retransmission time offset (repetition_offset) corresponding to the PDCCH #16 may be a duration of an interval between the PDCCH #16 (or the PDSCH #16) and the PDCCH #11 (or the PDSCH #11).

In the foregoing example, description is provided by using an example in which the terminal apparatus successfully decodes the PDCCH #11 and the PDSCH #11 and feeds back an ACK. If the terminal apparatus fails to decode the PDSCH #11, a NACK is fed back, or no information is fed back. If the terminal apparatus successfully decodes the PDCCH #12 and the PDSCH #12 and feeds back an ACK, a start point of the retransmission time offset (repetition_offset) of the PDCCH may be changed to a transmission start point of the PDCCH #12 or the PDSCH #12.

When the first data is uplink data, the retransmission time offset (repetition_offset) of the PDCCH in this embodiment of this application is a time interval starting from a PDCCH corresponding to an uplink resource used by the terminal apparatus to send a PUSCH for a first time to a current PDCCH. The retransmission time offset (repetition_offset) in this embodiment of this application may have another name. This is not limited in this embodiment of this application.

With reference to FIG. 6, transmission of the first data scheduled by using the PDCCH #11 is initial transmission. The PDCCH #12, the PDCCH #13, the PDCCH #14, the PDCCH #15, and the PDCCH #16 are used to schedule retransmission of the first data. If the terminal apparatus successfully decodes the PDCCH #11 and feeds back a PUSCH (the PUSCH includes the first data), in this case, a retransmission time offset (repetition_offset) corresponding to the PDCCH #12 may be a duration of an interval between the PDCCH #12 and the PDCCH #11. Similarly, the retransmission time offset (repetition_offset) corresponding to the PDCCH #13 may be a duration of an interval between the PDCCH #13 and the PDCCH #11. The retransmission time offset (repetition_offset) corresponding to the PDCCH #14 may be a duration of an interval between the PDCCH #14 and the PDCCH #11. The retransmission time offset (repetition_offset) corresponding to the PDCCH #15 may be a duration of an interval between the PDCCH #15 and the PDCCH #11. The retransmission time offset (repetition_offset) corresponding to the PDCCH #16 may be a duration of an interval between the PDCCH #16 and the PDCCH #11.

In the foregoing example, description is provided by using an example in which the terminal apparatus successfully decodes the PDCCH #11 and feeds back the PUSCH. If the terminal apparatus fails to decode the PDCCH #11, the PUSCH is not fed back. If the terminal apparatus successfully decodes the PDCCH #12 and feeds back a PUSCH, a start point of the retransmission time offset (repetition_offset) of the PDCCH may be changed to a transmission start point of the PDCCH #12.

**Parameter B5:** timing advance

In this embodiment of this application, the timing advance may also be a timing advance (timing advance, TA).

**Parameter B6:** offset (K_mac) between downlink frame timing and uplink frame timing on a network apparatus side

In this embodiment of this application, K_mac represents an offset between downlink frame timing and uplink frame timing on the network apparatus side. For ease of understanding, the offset between the downlink frame timing and the uplink frame timing on the network apparatus side may also be written as the offset (K_mac) between the downlink frame timing and the uplink frame timing. The network apparatus may configure K_mac by using MAC CE signaling.

**Parameter B7:** scheduling offset (K_offset)

In this embodiment of this application, K_offset represents a scheduling offset. For ease of understanding, the scheduling offset may also be written as the scheduling offset (K_offset).

K_offset may be a preconfigured value or a value configured by the network apparatus. K_offset may be used to modify a time sequence relationship for the NTN (the first communication system). K_offset may also be referred to as a timing offset (timing offset).

K_offset may enable a sufficient time length between receiving a PDSCH by the terminal apparatus and sending feedback information (for example, an ACK/a NACK) by the terminal apparatus to perform TA adjustment. Alternatively, by introducing K_offset, there may be a sufficient time length between receiving a PDCCH by the terminal apparatus and sending a PUSCH by the terminal apparatus, so that the terminal apparatus has a sufficient time for sending uplink data to perform TA adjustment.

**Parameter B8:** data processing delay ($\triangle t$)

In this embodiment of this application, $\triangle t$ represents a data processing delay. For ease of understanding, the data processing delay may also be written as a data processing delay ($\triangle t$).

$\triangle t$ may include a timing delay. For example, when the first data is downlink data, $\triangle t$ may include a PDCCH processing delay and/or a PDSCH processing delay. For another example, when the first data is uplink data, $\triangle t$ may include a PDCCH processing delay and/or a PUSCH processing delay.

**Parameter B9:** downlink scheduling delay ($k_0$)

In this embodiment of this application, $k_0$ represents a downlink scheduling delay. For ease of understanding, the downlink scheduling delay may also be written as a downlink scheduling delay ($k_0$).

$k_0$ may indicate a delay of a PDSCH scheduled by using a PDCCH. For example, $k_0$ may be a duration or a timing offset between a start transmission (or receiving) slot of a PDCCH and a start transmission (or receiving) slot of a PDSCH scheduled by using the PDCCH. With reference to FIG. 5, $k_0$ may be a duration between a start transmission slot of the PDCCH #11 and a start transmission slot of the PDSCH #11, or $k_0$ may be a duration between a start transmission slot of the PDCCH #12 and a start transmission slot of the PDSCH #12. A unit of $k_0$ may be a slot length.

**Parameter B10:** first feedback delay ($k_1$)

In this embodiment of this application, $k_1$ represents the first feedback delay. For ease of understanding, the first feedback delay may also be written as the first feedback delay ($k_1$).

$k_1$ indicates a delay of feedback information corresponding to a PDSCH scheduled by using a PDCCH in the terrestrial communication system (the second communication system). For example, $k_1$ may be a duration between a start transmission slot of a PDSCH in the terrestrial communication system and a slot in which the network apparatus receives feedback information (for example, an ACK or a NACK) for the PDSCH. With reference to FIG. 5, $k_1$ may be a direct duration from a start transmission slot of the PDSCH #11 in the terrestrial communication system to a slot in which an ACK is received. For example, $k_1$ may be the duration #11. A unit of $k_1$ may be a slot length.

**Parameter B11:** first uplink scheduling delay ($k_2$)

In this embodiment of this application, $k_2$ represents an uplink scheduling delay. For ease of understanding, the uplink scheduling delay may also be written as an uplink scheduling delay ($k_2$).

$k_2$ indicates a delay of a PUSCH scheduled by using a PDCCH in the terrestrial communication system (the second communication system). For example, $k_2$ may be a duration between a start transmission slot of the PDCCH and a slot in which the network apparatus in the terrestrial communication system receives the PUSCH scheduled by using the PDCCH. With reference to FIG. 6, $k_2$ may be a duration between a start transmission slot of the PDCCH #21 and a slot in which the network apparatus in the terrestrial communication system receives a PUSCH scheduled by using the PDCCH #21. For example, $k_2$ may be the duration #21 in FIG. 6. A unit of $k_2$ may be a slot length.

**Parameter B12:** second feedback delay

The second feedback delay indicates a delay of feedback information corresponding to a PDSCH scheduled by using a PDCCH in the NTN (the first communication system). For example, the second feedback delay may be a duration between a start transmission time of a PDSCH in the NTN and a time at which the network apparatus receives feedback information (for example, an ACK or a NACK) of the PDSCH. With reference to FIG. 5, the second feedback delay may be a duration from a start transmission time of the PDSCH #11 in the NTN to receiving of an ACK. For example, the second feedback delay may be the duration #12. For network apparatuses (for example, a satellite base station) with different orbital heights, a range of the second feedback delay may be 2 ms to 541.46 ms.

For example, the second feedback delay may also be represented as a time interval between a slot of a PDCCH or a PDSCH on a network apparatus side or a terminal apparatus side in the NTN (or an end slot of the PDCCH or the PDSCH) and a slot of feedback information (for example, a NACK/an ACK) corresponding to the PDCCH or the PDSCH. For example, a PDCCH corresponds to a slot #1, a PUSCH corresponds to a slot #2, and a feedback delay may be (Slot #2 - Slot #1) slot lengths. The feedback delay may also be represented in another time unit.

In this embodiment of this application, the second feedback delay may be determined based on at least one of TA, K_mac, K_offset, $\triangle t$, $k_0$, or $k_1$.

For example, the second feedback delay may be expressed as one of the following formulas (in actual calculation, all parameters may be uniformly calculated in a same time unit):

$$k_1+K\_offset+K\_mac;$$

$$k_0+k_1+K\_offset+K\_mac;$$

$$k_0+k_1+K\_offset;$$

$$K\_offset+K\_mac;$$

$$k_1+K\_offset+K\_mac;$$

or

$$k_1+K\_offset+K\_mac+\triangle t.$$

**Parameter** B13: second uplink scheduling delay

In this embodiment of this application, the second uplink scheduling delay indicates a delay of a PUSCH scheduled by using a PDCCH in the NTN (the first communication system). For example, the second uplink scheduling delay may be a duration between a start transmission time of a PDCCH and a time at which the network apparatus in the NTN receives a PUSCH scheduled by using the PDCCH. With reference to FIG. 6, $k_2$ may be a duration between a start transmission time of the PDCCH #21 and a time at which the network apparatus in the NTN receives a PUSCH scheduled by using the PDCCH #21. For example, the second uplink scheduling delay may be the duration #22.

For example, the scheduling delay may also be represented as a time interval between a slot of a PDCCH on the network apparatus side or the terminal apparatus side (or an end slot of the PDCCH) and a slot of a PUSCH scheduled by using the PDCCH. For example, a PDCCH corresponds to a slot #3, a PUSCH corresponds to a slot #4, and a scheduling delay may be (Slot #4 - Slot #3) slot lengths. The scheduling delay may also be represented in another time unit.

In this embodiment of this application, the second uplink scheduling delay may be determined based on at least one of TA, K_mac, K_offset, $\triangle t$, or $k_2$.

For example, the second uplink scheduling delay may be expressed as one of the following formulas (in actual calculation, all parameters may be uniformly calculated in a same time unit):

$$k_2+K\_offset+K\_mac;$$

$$k_2+k_1+K\_offset+K\_mac;$$

$$k_2+k_1+K\_offset;$$

$$K\_offset+K\_mac;$$

$$k_1+K\_offset+K\_mac;$$

$$K\_offset+K\_mac+\triangle t;$$

or

$$k_2+K\_offset+K\_mac+\triangle t.$$

**Parameter** B14: first quantity (m) of PDCCHs on which PDCCH blind detection is stopped

In this embodiment of this application, m represents the first quantity of PDCCHs. A value of m may be preset, or may be determined by the terminal apparatus, or may be indicated by the network apparatus to the terminal apparatus.

The value of m may be determined based on some parameters, for example, may be determined based on the retransmission time offset (repetition_offset) and the second feedback delay, or may be determined based on the retransmission time offset (repetition_offset) and the second uplink scheduling delay.

In a possible implementation, when the first data is downlink data, the network apparatus (or the terminal apparatus) may determine a PDCCH that meets a first condition. The first condition includes that a retransmission time offset (repetition_offset) corresponding to the PDCCH is not greater than (being not greater than may be replaced with being less than or equal to) the second feedback delay. For example, in FIG. 5, the network apparatus (or the terminal apparatus) determines that the PDCCH that meets the first condition includes the PDCCH #12, the PDCCH #13, and the PDCCH #14. The terminal apparatus determines the value of m based on a quantity of PDCCHs that meet the first condition. For example, the terminal apparatus uses, as the value of m, the quantity of PDCCHs that meet the first condition. In this embodiment of this application, a PDCCH whose retransmission time offset (repetition_offset) is equal to the second feedback delay may also be a PDCCH that meets the first condition, or may be a PDCCH that does not meet the first condition. In this embodiment of this application, an example in which this case meets the first condition is used for description.

For another example, when the first data is downlink data, after the network apparatus (or the terminal apparatus) successfully decodes the PDCCH and the PDSCH, the network apparatus (or the terminal apparatus) may use a quantity of remaining transmissions of the first data as the value of m. For example, in FIG. 5, when the network apparatus (or the terminal apparatus) successfully decodes the PDCCH #11 and the PDSCH #11, and the value of $N_0$ is 6, the network apparatus (or the terminal apparatus) may determine that five retransmissions of the first data remain to be performed. Therefore, it is determined that the value of m is 5, that is, the terminal apparatus stops subsequent PDCCH blind detection on the PDCCH #12, the PDCCH #13, the PDCCH #14, the PDCCH #15, and the PDCCH #16.

In another possible implementation, when the first data is uplink data, the terminal apparatus may determine a PDCCH that meets a second condition. The second condition includes that a retransmission time offset (repetition_offset) corresponding to the PDCCH is not greater than (being not greater than may be replaced with being less than or equal to) the second uplink scheduling delay. For example, in FIG. 6, the terminal apparatus determines that the PDCCH that meets the second condition includes the PDCCH #12, the PDCCH #13, and the PDCCH #14. The terminal apparatus determines the value of m based on a quantity of PDCCHs that meet the second condition. For example, the terminal apparatus uses, as the value of m, the quantity of PDCCHs that meet the second condition. In this embodiment of this application, a PDCCH whose retransmission time offset (repetition_offset) is equal to the second uplink scheduling delay may also be a PDCCH that meets the second condition, or may be a PDCCH that does not meet the second condition. In this embodiment of this application, an example in which this case meets the second condition is used for description.

For another example, when the first data is uplink data, when the network apparatus (or the terminal apparatus) successfully decodes the PDCCH, a quantity of remaining transmissions of the first data may be used as the value of m. For example, in FIG. 6, when the network apparatus (or the terminal apparatus) successfully decodes the PDCCH #11, and the value of $N_0$ is 6, the network apparatus (or the terminal apparatus) may determine that five retransmissions of the first data remain to be performed. Therefore, it is determined that the value of m is 5, that is, the terminal apparatus stops subsequent PDCCH blind detection on the PDCCH #22, the PDCCH #23, the PDCCH #24, the PDCCH #25, and the PDCCH #26.

In this solution, the second feedback delay or the second uplink scheduling delay is related to a round-trip delay of information transmission between the network apparatus and the terminal apparatus. Before the network apparatus receives the first information, the PDCCH sent by the network apparatus may be further used to schedule retransmission of the first data. Therefore, the PDCCH in the first duration determined based on the information is very likely to be used to schedule retransmission of the first data. Because the terminal apparatus has successfully decoded the PDCCH or the PDSCH and returned the first information, before the network apparatus receives the first information, the terminal apparatus may not perform PDCCH blind detection in the first duration, to reduce power consumption.

In this embodiment of this application, the terminal apparatus may determine the first duration based on at least one of the parameter B1, the parameter B2, the parameter B3, the parameter B4, the parameter B5, the parameter B6, the parameter B7, the parameter B8, the parameter B9, the parameter B10, the parameter B11, the parameter B12, the parameter B13, or the parameter B14. For example, the network apparatus sends, to the terminal apparatus, a parameter that can be used for determining the first duration, so that the terminal apparatus determines, based on these parameters, a second quantity of PDCCHs on which PDCCH blind detection is stopped, and then stops PDCCH blind detection in a duration of PDCCH blind detection for the second quantity of PDCCHs. The duration of PDCCH blind detection for the second quantity of PDCCHs may be understood as the first duration. For another example, the network apparatus determines the first duration, and indicates the first duration to the terminal apparatus. For another example, the terminal apparatus further determines the first duration.

The following separately uses Implementation C and Implementation D for description. In Implementation C, the terminal apparatus determines the first duration based on first configuration information sent by the network apparatus. In Implementation D, the terminal apparatus determines the first duration.

**Implementation** C: The terminal apparatus determines the first duration based on the first configuration information sent by the network apparatus.

The network apparatus sends the first configuration information to the terminal apparatus. The first configuration information may include at least one of the parameter B1, the parameter B2, the parameter B3, the parameter B4, the parameter B5, the parameter B6, the parameter B7, the parameter B8, the parameter B9, the parameter B10, the parameter B11, the parameter B12, the parameter B13, or the parameter B14. In another possible implementation, the first configuration information may include information about the first duration. For example, the first configuration information includes duration information (for example, 30 ms) of the first duration. Therefore, after determining a start point of the first duration, the terminal apparatus stops PDCCH blind detection in the first duration.

In this embodiment of this application, there are a plurality of forms of parameters included in the first configuration information. By using examples of Implementation C1, Implementation C2, Implementation C3, Implementation C4, and Implementation C5, the following describes several implementations in which the terminal apparatus determines the first duration.

**Implementation C1:** The first configuration information includes one or more of a maximum retransmission time offset (max_repetition_offset), a retransmission time interval (repetition interval), or $N_0$. The first configuration information further includes the value of m.

For example, the first configuration information includes the value of m, and further includes any two of the maximum retransmission time offset (max_repetition_offset), the retransmission time interval (repetition interval), or $N_0$.

In a possible implementation, the terminal apparatus may determine, based on the value of m, the second quantity of PDCCHs on which PDCCH blind detection is stopped. The second quantity of PDCCHs may be equal to m, or may be less than m. Then, the terminal apparatus stops PDCCH blind detection in a duration of PDCCH blind detection of the second quantity of PDCCHs, thereby reducing power consumption. The duration of PDCCH blind detection for the second quantity of PDCCHs may be used to replace the first duration in this application. In a possible implementation, the terminal apparatus may determine the duration of PDCCH blind detection of the second quantity of PDCCHs based on a time interval between two adjacent transmissions of the first data (or the time interval between two adjacent PDCCHs). For example, if the value of m is 3, and the time interval between two adjacent transmissions of the first data (or the time interval between two adjacent PDCCHs) is 10 milliseconds, a length of the first duration is 30 milliseconds.

In a possible implementation, the terminal apparatus calculates $N_1$ based on the maximum retransmission time offset (max_repetition_offset) and the retransmission time interval (repetition interval). $N_1$ is a quantity of remaining allowed transmissions of the first data. The terminal apparatus calculates a value of k based on $N_1$ and m. The value of k is a smaller value in m and $N_1$. A formula may be expressed as k=min(m, $N_1$). In this embodiment of this application, k indicates the second quantity of PDCCHs. Because $N_1$ is the quantity of remaining allowed transmissions of the first data, the terminal apparatus may consider a factor of the quantity of remaining allowed transmissions of the first data, so that a quantity of times of PDCCH blind detection to be stopped can be more properly determined, thereby avoiding missing transmission of new data as much as possible.

For example, the terminal apparatus uses a quotient of the maximum retransmission time offset (max_repetition_offset) and the retransmission time interval (repetition interval) as $N_0$. For example, if the maximum retransmission time offset (max_repetition_offset) is 60 ms, and the retransmission time interval (repetition interval) between two adjacent transmissions is 10 ms, the terminal may determine that $N_0$ is six, and the six retransmissions may be distributed at an equal interval. If the terminal apparatus determines that a quantity of times that the first data has been transmitted is 1, the terminal apparatus may use a difference between $N_0$ and the quantity of transmissions as $N_1$. In this example, $N_1$ is 5.

In another possible implementation, the network apparatus may include, in the PDCCH, information indicating an $i^{th}$ transmission. The information indicating the $i^{th}$ transmission may also be referred to as a retransmission sequence number. The retransmission sequence number may indicate a retransmission sequence number of a PDCCH/PDSCH in current transmission. The terminal apparatus may determine, based on the retransmission sequence number, the retransmission sequence number of the PDCCH/PDSCH in current transmission, and then determine a value of $N_1$ with reference to other parameters (for example, $N_0$).

For example, if $N_1$ is 5 and m is 3, the terminal apparatus may determine k=min(3, 5)=3. In this example, after successfully decoding the PDCCH or the PDSCH, the terminal apparatus no longer performs PDCCH blind detection on three subsequent consecutive PDCCHs, and performs PDCCH blind detection from a resource of a subsequent $4^{th}$ PDCCH, to reduce power consumption. The value of k is a smaller value in m and $N_1$. In this way, a PDCCH on which the terminal apparatus stops PDCCH blind detection is a PDCCH that is allowed to be used to schedule retransmission of the first data. In this way, it can be avoided as much as possible to miss transmission of new data.

In this embodiment of this application, resources of a plurality of PDCCHs used to schedule same data may have a mapping (or binding) relationship, and resources of a plurality of PDSCHs used to transmit the same data may have a mapping (or binding) relationship. These mapping relationships may be indicated by the network apparatus to the terminal apparatus, or may be configured to the terminal apparatus in a preconfiguration manner.

**Implementation C2:** The first configuration information includes one or more of a maximum retransmission time offset (max_repetition_offset), a retransmission time interval (repetition interval), or $N_0$.

For example, the first configuration information includes any two of the maximum retransmission time offset (max_repetition_offset), the retransmission time interval (repetition interval), or $N_0$. A time at which the first information sent by the terminal apparatus arrives at the network apparatus can be deduced based on the information. Before the network apparatus receives the first information, a PDCCH sent by the network apparatus is very likely to be used to schedule retransmission of the first data. Therefore, a PDCCH in the first duration determined based on the information is very likely to be used to schedule retransmission of the first data. Because the terminal apparatus has successfully decoded the PDCCH or the PDSCH and returned the first information, before the network apparatus receives the first information, the terminal apparatus may not perform PDCCH blind detection in the first duration, to reduce power consumption.

In Implementation C3, the first configuration information may not include the value of m (the parameter B4). For a PDCCH, the terminal apparatus determines, based on a relationship between a retransmission time offset (repetition_offset) of the PDCCH and a second feedback delay (or a second uplink scheduling delay), whether blind detection needs to be performed on the PDCCH. The following separately describes, by using Implementation C2.1 and Implementation C2.2, a case in which the first data is downlink data or uplink data.

**Implementation C2.1:** The first data is downlink data.

In Implementation C2.1, in a possible implementation, for a PDCCH, the terminal apparatus determines, based on a relationship between a retransmission time offset (repetition_offset) of the PDCCH and a second feedback delay, whether blind detection needs to be performed on the PDCCH.

For example, for a PDCCH, if the PDCCH meets a first condition, the terminal apparatus determines that blind detection does not need to be performed on the PDCCH. For example, the first condition includes that the retransmission time offset (repetition_offset) corresponding to the PDCCH is not greater than the second feedback delay. For another example, if the PDCCH does not meet a first condition, the terminal apparatus determines that blind detection does not need to be performed on the PDCCH. In this embodiment of this application, the terminal apparatus may determine, based on a result of blind detection on the PDCCH, whether data scheduled by using the PDCCH is retransmission of the first data or other newly transmitted data. If the data is retransmission of the first data, the terminal apparatus may also send the first information (for example, an ACK) on a feedback resource corresponding to a PDSCH scheduled by using the PDCCH. If the data is the newly transmitted data, the terminal apparatus may send the feedback information (an ACK and/or a NACK) based on whether the PDCCH or the PDSCH is successfully decoded. For related content, refer to the related content of initial transmission of the first data. Details are not described again.

In another possible implementation, for a PDCCH, the terminal apparatus determines, based on a relationship between a retransmission time offset (repetition_offset) of the PDCCH and a second feedback delay, whether the first information (for example, an ACK) needs to be sent. For example, if the PDCCH meets a first condition, the terminal apparatus determines to retransmit the first information (for example, the ACK) on a feedback resource corresponding to a PDSCH scheduled by using the PDCCH.

**Implementation C2.2:** The first data is uplink data.

In Implementation C2.2, in a possible implementation, for a PDCCH, the terminal apparatus determines, based on a relationship between a retransmission time offset (repetition_offset) of the PDCCH and a second uplink scheduling delay, whether blind detection needs to be performed on the PDCCH.

For example, for a PDCCH, if the PDCCH meets a second condition, the terminal apparatus determines that blind detection does not need to be performed on the PDCCH. For example, the second condition includes that the retransmission time offset (repetition_offset) corresponding to the PDCCH is not greater than the second uplink scheduling delay. For another example, if the PDCCH does not meet a second condition, the terminal apparatus determines that blind detection does not need to be performed on the PDCCH. For related content of the second condition, refer to the foregoing description. Details are not described again.

In another possible implementation, for a PDCCH, the terminal apparatus determines, based on a relationship between a retransmission time offset (repetition_offset) of the PDCCH and a second uplink scheduling delay, whether the first information (for example, an ACK) needs to be sent. For example, if the PDCCH meets a second condition, the terminal apparatus determines to retransmit the first information (for example, the first data) on a PUSCH scheduled by using the PDCCH.

**Implementation C3:** The first configuration information includes an index value.

In this embodiment of this application, the index value is in an association relationship with one or more of the parameter B1, the parameter B2, the parameter B3, the parameter B4, the parameter B3, the parameter B4, the parameter B5, the parameter B6, the parameter B7, the parameter B8, the parameter B9, the parameter B10, the parameter B11, the parameter B12, the parameter B13, or the parameter B14. The association relationship may be prestored in the terminal apparatus, or preconfigured for the terminal apparatus, or sent by the network apparatus to the terminal apparatus. Then, the terminal apparatus may determine, based on the index value in the first configuration information, a parameter associated with the index value, and then determine, based on values of these parameters, a quantity of PDCCHs on which PDCCH blind detection is stopped. Therefore, after the PDCCH or the PDSCH is successfully decoded, PDCCH blind detection may be stopped during PDCCH blind detection for the quantity of PDCCHs, thereby reducing power consumption. In this solution, signaling overheads can be reduced because the first configuration information may indicate each parameter by using an index value.

Table 1, Table 2, Table 3, Table 4, and Table 5 below show examples of several association relationships between an index value and a parameter. For example, if an index value in Table 2 is 0, a retransmission time interval (repetition interval) corresponding to the index value is 10 ms, and a maximum retransmission time offset (max_repetition_offset) (ms) corresponding to the index value is 60 milliseconds. In this example, because the retransmission time interval (repetition interval) has only one value, it may be determined that a time interval between any two transmissions is 10 milliseconds. For another example, in Table 4, if an index value is 0, retransmission time intervals (repetition interval) corresponding to the index value are 10 ms, 10 ms, 10 ms, 10 ms, and 10 ms. In this case, the index value indicates that a time interval between any two transmissions is 10 milliseconds. For another example, in Table 4, if an index value is 1, retransmission time intervals (repetition interval) corresponding to the index value are 10 ms, 20 ms, and 30 ms. In this case, the index value indicates that a time interval between a 1st transmission and a 2nd transmission is 10 milliseconds, a time interval between the 2nd transmission and a 3rd transmission is 20 milliseconds, and a time interval between the 3rd transmission and a 4th transmission is 30 milliseconds. For other content in Table 1, Table 2, Table 3, Table 4, and Table 5, refer to the foregoing content. Details are not described again.

Table 1 Examples of parameters associated with index values

| Index value | Retransmission time interval (repetition interval) (ms) | Maximum retransmission time offset (max_repetition_offset) (ms) |
|---|---|---|
| 0 | 10 | 60 |
| 1 | 20 | 60 |
| 2 | 30 | 60 |
| 3 | 40 | 80 |

Table 2 Examples of parameters associated with index values

| Index value | Maximum retransmission time offset (max_repetition_offset) (ms) | Maximum quantity of retransmissions $N_0$ |
|---|---|---|
| 0 | 60 | 6 |
| 1 | 60 | 3 |
| 2 | 60 | 2 |
| 3 | 80 | 2 |

Table 3 Examples of parameters associated with index values

| Index value | Retransmission time interval (repetition interval) (ms) | Maximum quantity of retransmissions $N_0$ |
|---|---|---|
| 0 | 10 | 6 |
| 1 | 20 | 3 |
| 2 | 30 | 2 |
| 3 | 40 | 2 |

Table 4 Examples of parameters associated with index values

| Index value | Retransmission time interval (repetition interval) (ms) |
|---|---|
| 0 | 10, 10, 10, 10, 10 |
| 1 | 10, 20, 30 |
| 2 | 20, 20, 20 |
| 3 | 30, 30 |

**Implementation C4:** The first configuration information includes information used for determining the second feedback delay and a second duration (t_residual).

For example, the first configuration information includes any one (or any two) of the maximum retransmission time offset (max_repetition_offset), the retransmission time interval (repetition interval), or $N_0$.

The second duration is determined based on a duration between a time at which the PDCCH (or the PDSCH) is successfully decoded and a transmission end time of the PDCCH (or the PDSCH) in an $N_0^{th}$ transmission. The second duration may be represented as the second duration (t_residual).

For example, when the first data is downlink data, the second duration (t_residual) is a duration between a time at which a PDSCH scheduled by using a PDCCH is successfully decoded and an end time of a maximum quantity that is of retransmissions of the first data and that is configured by the network apparatus. A retransmission end time of the first data may be a retransmission end time of the PDSCH in the $N_0^{th}$ retransmission. For another example, when the first data is uplink data, the second duration (t_residual) is a duration between a time at which a PDCCH is successfully decoded and a retransmission end time of the PDCCH in the $N_0^{th}$ retransmission.

The terminal apparatus may determine the second feedback delay and the second duration based on the parameter included in the first configuration information, and then determine the first duration based on the second feedback delay and the second duration. For example, the first duration is a smaller value in the second feedback delay and the second duration (t_residual), and a formula is expressed as: First duration=min(Second feedback delay, Second duration (t_residual)). In a possible implementation, the terminal apparatus uses, as the second duration (t_residual), a difference between a maximum retransmission time offset (max_repetition_offset) and a duration occupied by the transmitted first data. Because the second feedback delay may indicate the duration in which the first information sent by the terminal apparatus arrives at the network apparatus, and the second duration may indicate a deadline for allowed retransmission of the first data, both the transmission delay of the first information and the deadline of retransmission of the first data are considered in determining the first duration. In addition, because the first duration is a smaller value, a time at which the terminal apparatus stops PDCCH blind detection does not exceed the deadline of retransmission of the first data. In this way, the terminal apparatus can be prevented from missing new data as much as possible.

With reference to FIG. 5, for example, transmission of the first data on the PDSCH #11 scheduled by using the PDCCH #11 is initial transmission. The PDCCH #12, the PDCCH #13, the PDCCH #14, the PDCCH #15, and the PDCCH #16 are configured as PDCCHs used to retransmit the first data. The terminal apparatus uses, as the duration occupied by the transmitted first data, a product of the quantity of times that the first data has been transmitted and the retransmission time interval (repetition interval). If the value of the first duration calculated by the terminal apparatus is the second duration (t_residual), and the terminal apparatus successfully decodes the PDCCH #11 and the PDSCH #11 and feeds back the ACK, the terminal apparatus no longer performs PDCCH blind detection subsequently on the PDCCH #12, the PDCCH #13, the PDCCH #14, the PDCCH #15, and the PDCCH #16. The terminal apparatus starts to perform PDCCH blind detection on a resource of a PDCCH following the PDCCH #16, to reduce power consumption. It can be learned that, in this solution, an amount of information sent by the network apparatus to the terminal apparatus is relatively small, to reduce signaling overheads.

**Implementation C5:** The first configuration information includes information used for determining the second uplink scheduling delay and a second duration (t_residual).

For example, the first configuration information includes any one (or any two) of the maximum retransmission time offset (max_repetition_offset), the retransmission time interval (repetition interval), or $N_0$.

The terminal apparatus may determine the second uplink scheduling delay and the second duration based on the parameter included in the first configuration information, and then determine the first duration based on the second uplink scheduling delay and the second duration. For example, the first duration is a smaller value in the second uplink scheduling delay and the second duration (t_residual), and a formula is expressed as: First duration=min(Second uplink scheduling delay, Second duration (t_residual)). Because the second uplink scheduling delay may indicate the duration in which the first information sent by the terminal apparatus arrives at the network apparatus, and the second duration may indicate a deadline for allowed retransmission of the first data, both the transmission delay of the first information and the deadline of retransmission of the first data are considered in determining the first duration. In addition, because the first duration is a smaller value, a time at which the terminal apparatus stops PDCCH blind detection does not exceed the deadline of retransmission of the first data. In this way, the terminal apparatus can be prevented from missing new data as much as possible.

With reference to FIG. 6, for example, transmission of the first data scheduled by using the PDCCH #21 is initial transmission. The PDCCH #22, the PDCCH #23, the PDCCH #24, the PDCCH #25, and the PDCCH #26 are configured as PDCCHs used to retransmit the first data. The terminal apparatus uses, as the duration occupied by the transmitted first data, a product of the quantity of times that the first data has been transmitted and the retransmission time interval (repetition interval). If the value of the first duration calculated by the terminal apparatus is the second duration (t_residual), and the terminal apparatus successfully decodes the PDCCH #21 and feeds back the PUSCH, the terminal apparatus no longer performs PDCCH blind detection subsequently on the PDCCH #22, the PDCCH #23, the PDCCH #24, the PDCCH #25, and the PDCCH #26. The terminal apparatus starts to perform PDCCH blind detection on a resource of a PDCCH following the PDCCH #26, to reduce power consumption. It can be learned that, in this solution, an amount of information sent by the network apparatus to the terminal apparatus is relatively small, to reduce signaling overheads.

In this embodiment of this application, the parameter in the first configuration information may be carried in one message, or may be carried in a plurality of messages.

The first configuration information may be carried in multicast information and/or broadcast information. The first configuration information is sent in a broadcast or multicast manner, to reduce resource overheads and further reduce system scheduling complexity. The broadcast information includes: a system information block (system information block, SIB) 1, other system information (other system information, OSI), or a master information block (master information block, MIB).

Alternatively, the first configuration information may be carried in signaling in a connection setup phase and a subsequent communication process, for example, one or more of radio resource control (radio resource control, RRC) signaling, downlink control information (downlink control information, DCI) signaling, group DCI, or a media access control (media access control, MAC) control element (control element, CE). The RRC signaling may include one or more of an RRC setup (RRCsetup) message, an RRC reconfiguration (RRCreconfiguration) message, or an RRC resume ((RRCresume)) message.

The first configuration information may also be transmitted with data or carried in a PDSCH that is separately allocated to the terminal apparatus, and then sent by the network apparatus to the terminal apparatus in a unicast or multicast manner. In this way, the network apparatus can relatively flexibly control a parameter value in first configuration information corresponding to each terminal apparatus/each group of terminal apparatuses.

For example, factors such as different locations or different regions may cause different occurrence probabilities of burst shielding and/or different shielding time lengths. In this case, the network apparatus may configure the parameter in the first configuration information for the terminal apparatus based on a location (or a region) of the terminal apparatus, to achieve effect of optimizing a data transmission delay, a data buffer size, and communication performance/system communication performance (for example, spectral efficiency and a buffer requirement) of terminal apparatus. In this way, an unnecessary processing delay, a spectral efficiency loss, and an excessively high buffer size can be avoided, to improve overall communication performance of the terminal apparatus and a system.

**Implementation D:** The terminal apparatus determines the first duration.

In a possible implementation, the terminal apparatus may obtain some parameters in advance, for example, TA and K_mac. The terminal apparatus may determine the first duration based on these known parameters. In this solution, the network apparatus does not need to deliver the first configuration information, to reduce signaling overheads.

For example, the terminal apparatus may determine a third duration and a second duration, and further determine the first duration based on the third duration and the second duration. For example, the first duration is a smaller value in the third duration and the second duration (t_residual), and a formula is expressed as: First duration=-min(Third duration, Second duration (t_residual)). The third duration may be, for example, (TA+K_mac); or (TA+K_mac+$\triangle$t).

Because the third duration may also assist in determining the duration in which the first information sent by the terminal apparatus arrives at the network apparatus, and the second duration may indicate a deadline for allowed retransmission of the first data, both the transmission delay of the first information and the deadline of retransmission of the first data are considered in determining the first duration. In addition, because the first duration is a smaller value, a time at which the terminal apparatus stops PDCCH blind detection does not exceed the deadline of retransmission of the first data. In this way, the terminal apparatus can be prevented from missing new data as much as possible.

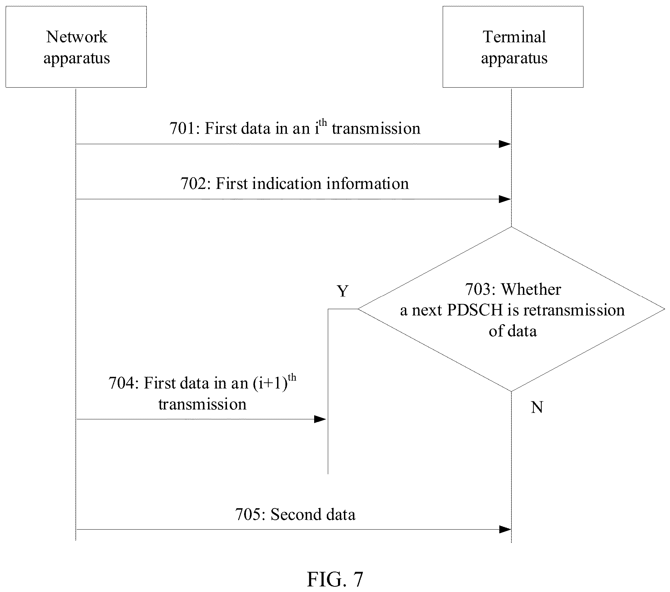

Based on the embodiments shown in FIG. 1, FIG. 2, FIG. 3, FIG. 4, FIG. 5, and FIG. 6 and the foregoing other content, FIG. 7 is an example of a schematic flowchart of a communication method according to an embodiment of this application.

For ease of understanding, FIG. 7 is described from a perspective of interaction between apparatuses. For a terminal apparatus and a network apparatus related in FIG. 7, refer to the related descriptions in FIG. 4. Details are not described again.

As shown in FIG. 7, the method includes the following steps.

**Step 701:** The network apparatus sends first data in an ith transmission.

Correspondingly, the terminal apparatus receives the first data in the ith transmission, where i is a positive integer less than or equal to n, n is a quantity of transmissions of the first data, and n is a positive integer greater than 1.

**Step 702:** The network apparatus sends first indication information.

Correspondingly, the terminal apparatus receives the first indication information.

The first indication information indicates whether a next PDSCH is retransmission of data, and/or whether a next PDCCH is control signaling used to schedule data retransmission.

In a possible implementation, the first indication information may be carried on a PDCCH. For example, information carried in a specified bit in the PDCCH indicates whether a next PDSCH is retransmission of data, and/or indicates whether a next PDCCH is control signaling used to schedule data retransmission.

**Step 703:** The terminal apparatus determines whether the next PDSCH is retransmission of data.

If the next PDSCH is retransmission of data, step 704 is performed.

If the next PDSCH is not retransmission of data, step 705 is performed.

Step 703 may also be replaced with the following: The terminal apparatus determines whether the next PDCCH is control signaling used to schedule data retransmission. If the next PDCCH is control signaling used to schedule data retransmission, step 704 is performed. If the next PDCCH is not control signaling used to schedule data retransmission, step 705 is performed.

In step 703, if the first indication information is second information, it is determined that the next PDSCH is retransmission of data. The second information may also be understood as information indicating that data carried on the next PDSCH is retransmitted data. Alternatively, the second information may be understood as information indicating whether the next PDCCH is control signaling used to schedule data retransmission. Alternatively, the second information may be understood as information indicating existence of an $(i+1)^{th}$ transmission of the first data.

In step 703, if the first indication information is third information, it is determined that next PDCCH signaling is not control signaling used to schedule data retransmission, and/or it is determined that data carried on the next PDSCH is not retransmission of the first data. The third information may also be understood as information indicating that the next PDSCH is not retransmission of data. Alternatively, the third information may be understood as information indicating whether the next PDCCH is not control signaling used to schedule data retransmission. Alternatively, the third information may be understood as information indicating non-existence of an $(i+1)^{th}$ transmission of the first data.

In a possible implementation, the second information may include at least one bit value, where the at least one bit value indicates existence of the $(i+1)^{th}$ transmission of the first data. The third information may include at least one bit value, where the at least one bit value indicates non-existence of the $(i+1)^{th}$ transmission of the first data. For example, if a value carried in a specified bit is 1 (1 may be considered as the second information), the bit value indicates that the next PDSCH is retransmission of data, and/or indicates that the next PDCCH is control signaling used to schedule data retransmission. For another example, if a value carried in a specified bit is 0 (0 may be considered as the third information), the bit value indicates that the next PDSCH is not retransmission of data, and/or indicates that the next PDCCH is not control signaling used to schedule data retransmission.

In this embodiment of this application, whether data is retransmitted may have a mapping relationship with one or more of a CORESET, search space, a DMRS scrambling code, a CRC scrambling code, or a CSI report (reporting). For example, the second information may include one or more of the following: indication information of a first preset CORESET index or set; indication information of a first preset search space index; indication information of a first preset DMRS scrambling code; indication information of a first preset CRC scrambling code; or indication information of a first preset CSI report (reporting). The CSI report may indicate association reliability of a channel quality indicator (channel quality indicator, CQI) reported by the terminal apparatus.

For example, the first preset CORESET index or set may indicate that the next PDSCH is retransmission of data. When determining that a CORESET index of the first data in the $i^{th}$ transmission is the first preset CORESET index, the terminal apparatus may determine that the next PDSCH is retransmission of data. For another example, the first preset search space index may indicate that the next PDSCH is retransmission of data. When determining that a search space index of the first data in the $i^{th}$ transmission is the first preset search space index, the terminal apparatus may determine that the next PDSCH is retransmission of data. Other content is similar to this. Details are not described again. When the terminal apparatus determines that a report (reporting) of the first data in the $i^{th}$ transmission is the first preset CSI report, it may be determined that the next PDSCH is retransmission of data. For example, the first preset CSI report may indicate that an association reliability requirement of a CQI reported by the terminal apparatus is higher than a first threshold. Other content is similar to this. Details are not described again.

In another possible implementation, the third information may include one or more of the following: indication information of a second preset CORESET index; indication information of a second preset search space index; indication information of a second preset DMRS scrambling code; indication information of a second preset CRC scrambling code; indication information of a second preset CSI index; or indication information of a second preset reliability degree.

For example, the second preset CORESET index may indicate that the next PDSCH is transmission of new data. When determining that a CORESET index of the first data in the $i^{th}$ transmission is the second preset CORESET index, the terminal apparatus may determine that the next PDSCH is transmission of new data. For another example, the second preset search space index may indicate that the next PDSCH is retransmission of data. When determining that a search space index of the first data in the $i^{th}$ transmission is the second preset search space index, the terminal apparatus may determine that the next PDSCH is transmission of new data. Other content is similar to this. Details are not described again.

**Step 704:** The network apparatus sends the first data in an $(i+1)^{th}$ transmission.

Correspondingly, the terminal apparatus receives the first data in the $(i+1)^{th}$ transmission based on the second information.

In this embodiment of this application, the network apparatus may alternatively configure some parameters for the terminal apparatus, for example, a retransmission time interval (repetition interval), so that the terminal apparatus can determine, based on these parameters, resource information for next data transmission.

The terminal apparatus may further receive information indicating whether the next PDSCH (a PDSCH after the first data in the $(i+1)^{th}$ transmission) is retransmission of the first data. For example, the terminal apparatus further receives third information (for example, the third information may be carried on a PDCCH used to schedule the first data in the $(i+1)^{th}$ transmission), and the third information indicates non-existence of an $(i+2)^{th}$ transmission of the first data. In this case, the terminal apparatus may determine that next transmission is transmission of new data.

**Step 705:** The network apparatus sends second data.

Correspondingly, the terminal apparatus receives the second data based on the third information.

In the foregoing solution, the network apparatus may not need to map a retransmission resource for a period of time, but indicate, in a dynamic configuration manner, whether a next PDSCH is retransmission of data. For example, first indication information carried on the PDCCH indicates whether the next PDSCH is retransmission of data, so that the terminal apparatus can determine, based on information indicated by the PDCCH, whether data retransmission ends. This solution can implement flexible switching between retransmission and non-retransmission.

In this embodiment of this application, the network apparatus may determine, based on whether an ACK sent by the terminal apparatus is received, whether the next PDSCH is retransmission of data. For example, after the network apparatus sends the first data, if the network apparatus has not received an ACK, the network apparatus determines that the next PDSCH is retransmission of the first data. When the network apparatus has received the ACK, the network apparatus determines that the next PDSCH is transmission of new data.

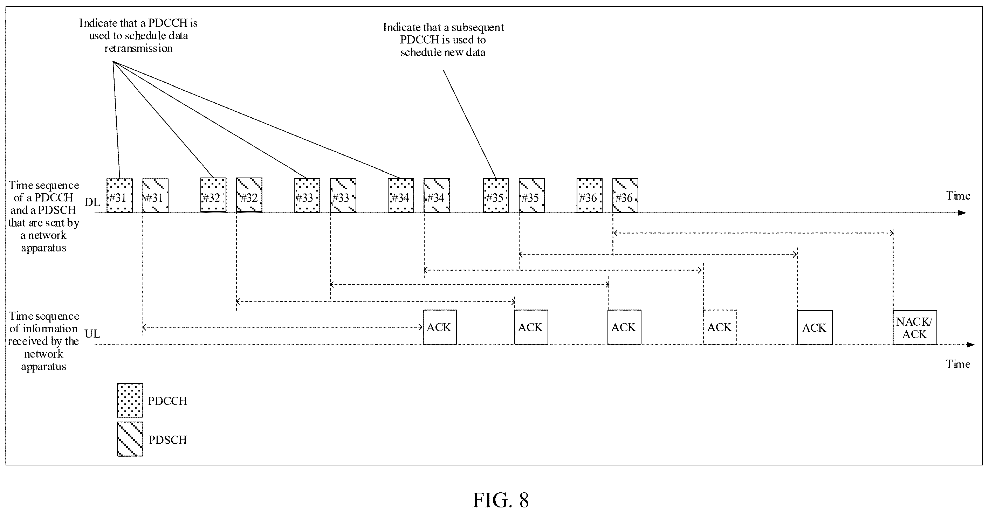

FIG. 8 is an example of a diagram of data transmission. FIG. 8 shows an example of a time sequence relationship of various pieces of data. Each piece of data (such as a PDCCH and a PDSCH) on a DL may reflect a time sequence relationship of downlink data, and each piece of data on an UL may reflect a time sequence relationship of uplink data. As shown in FIG. 8, when the network apparatus sends a PDCCH #31, because the network apparatus has not received an ACK of data scheduled by using the PDCCH #31, the network apparatus adds, to the PDCCH #31, information indicating that a next PDCCH is used to schedule data retransmission. In this case, the terminal apparatus may determine that a PDSCH #32 scheduled by using a PDCCH #32 is retransmission of data. Similarly, when the network apparatus sends the PDCCH #32, a PDCCH #33, and a PDCCH #34, because the network apparatus has not received an ACK, the network apparatus adds, to the PDCCH #32, the PDCCH #33, and the PDCCH #34, information indicating that a next PDCCH is used to schedule data retransmission.

When the network apparatus sends a PDCCH #35, because the network apparatus has received the ACK of the data scheduled by using the PDCCH #31, the network apparatus adds, to the PDCCH #35, information indicating that a next PDCCH is used to schedule transmission of new data. The network apparatus may schedule transmission of new data by using the PDCCH #36.

In this embodiment of this application, an example in which the network apparatus may indicate, at a time, whether data scheduled by using a subsequent PDCCH is retransmitted is used for description. In actual application, the network apparatus may also indicate, at a time, whether data scheduled by using a plurality of subsequent PDCCHs is retransmitted, so that the terminal apparatus can determine, based on information sent by the network apparatus, whether subsequent data is retransmitted.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

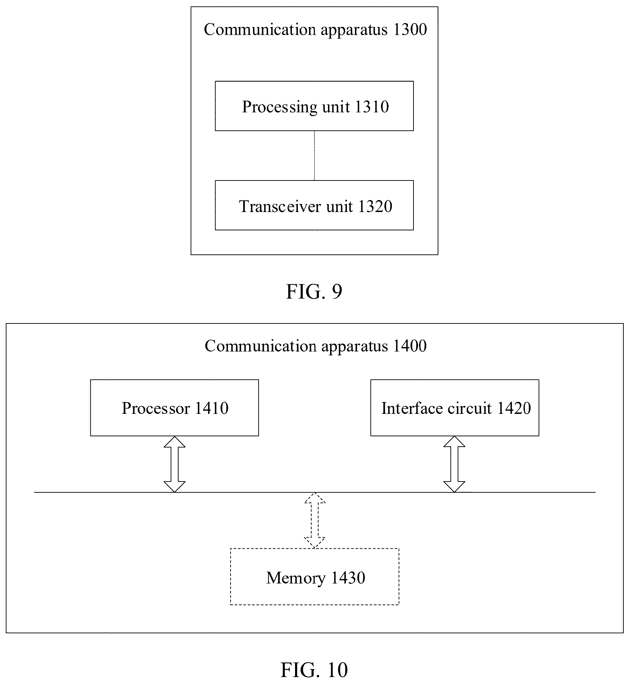

FIG. 9 and FIG. 10 are diagrams of structures of possible communication apparatuses according to embodiments of this application. These communication apparatuses may be configured to implement the functions of the terminal or the base station in the foregoing method embodiments. Therefore, beneficial effects of the foregoing method embodiments can also be implemented. In embodiments of this application, the communication apparatus may be a terminal apparatus or a network apparatus. The terminal apparatus may be a terminal or a module (for example, a chip) in a terminal. The network apparatus may be a network device or a module (for example, a chip) in a network device.

As shown in FIG. 9, a communication apparatus 1300 includes a processing unit 1310 and a transceiver unit 1320. The communication apparatus 1300 is configured to implement functions of a terminal or a base station in the method embodiment shown in FIG. 4 or FIG. 7.

When the communication apparatus 1300 is configured to implement the functions of the terminal apparatus in the method embodiment shown in FIG. 4, the processing unit 1310 is configured to: perform blind detection on a PDCCH, where the PDCCH is used to schedule first data in an $i^{th}$ transmission; and after the PDCCH is successfully decoded, stop PDCCH blind detection in a first duration, and send first information through the transceiver unit 1320.

When the communication apparatus 1300 is configured to implement the functions of the terminal apparatus in the method embodiment shown in FIG. 4, in a possible implementation, the processing unit 1310 is configured to send the first information on a first resource through the transceiver unit 1320.

When the communication apparatus 1300 is configured to implement the functions of the terminal in the method embodiment shown in FIG. 4, in a possible implementation, the processing unit 1310 is configured to: after the PDCCH is successfully decoded, and the first data in the $i^{th}$ transmission is successfully decoded, stop PDCCH blind detection in the first duration.

When the communication apparatus 1300 is configured to implement the functions of the terminal apparatus in the method embodiment shown in FIG. 4, in a possible implementation, the processing unit 1310 is configured to: after the PDCCH is successfully decoded, stop PDCCH blind detection in the first duration.

When the communication apparatus 1300 is configured to implement the functions of the terminal apparatus in the method embodiment shown in FIG. 4, in a possible implementation, the processing unit 1310 is configured to: receive first configuration information through the transceiver unit 1320, where the first configuration information includes information used for determining the first duration; and determine the first duration based on the information used for determining the first duration.

When the communication apparatus 1300 is configured to implement the functions of the terminal apparatus in the method embodiment shown in FIG. 4, in a possible implementation, the processing unit 1310 is configured to: determine, based on an association relationship between an index value in first configuration information and information indicating the first duration, the information indicating the first duration, and determine the first duration based on the information indicating the first duration.

When the communication apparatus 1300 is configured to implement the functions of the terminal apparatus in the method embodiment shown in FIG. 4, in a possible implementation, the processing unit 1310 is configured to: send the first information on a first resource through the transceiver unit 1320; and send the first information on a second resource through the transceiver unit 1320.

When the communication apparatus 1300 is configured to implement the functions of the network apparatus in the method embodiment shown in FIG. 4, the processing unit 1310 is configured to: through the transceiver unit 1320, send a physical downlink control channel PDCCH, where the PDCCH is used to schedule the first data in the $i^{th}$ transmission; send the first configuration information, where the first configuration information includes the information used for determining the first duration, the first configuration information is used by the terminal apparatus to stop PDCCH blind detection in the first duration after the PDCCH is successfully decoded; and receive the first information, where the first information includes: information indicating that the first data is successfully decoded, or the first data.

When the communication apparatus 1300 is configured to implement the functions of the network apparatus in the method embodiment shown in FIG. 4, in a possible implementation, the processing unit 1310 is configured to receive the first information on a first resource through the transceiver unit 1320.

When the communication apparatus 1300 is configured to implement the functions of the network apparatus in the method embodiment shown in FIG. 4, in a possible implementation, the processing unit 1310 is configured to receive the first information on a second resource through the transceiver unit 1320.

When the communication apparatus 1300 is configured to implement the functions of the terminal apparatus in the method embodiment shown in FIG. 7, the processing unit 1310 is configured to: through the transceiver unit 1320, receive first data in an $i^{th}$ transmission, where i is a positive integer less than or equal to $N_0$, and $N_0$ is a quantity of transmissions of the first data; and receive second information, and receive, based on the second information, first data in an $(i+1)^{th}$ transmission.

When the communication apparatus 1300 is configured to implement the functions of the terminal apparatus in the method embodiment shown in FIG. 7, in a possible implementation, the processing unit 1310 is configured to: through the transceiver unit 1320, receive the first data in the $(i+1)^{th}$ transmission, and receive third information.

When the communication apparatus 1300 is configured to implement the functions of the network apparatus in the method embodiment shown in FIG. 7, the processing unit 1310 is configured to: through the transceiver unit 1320, send first data in an $i^{th}$ transmission, where i is a positive integer less than or equal to $N_0$, and $N_0$ is a quantity of transmissions of the first data; and send second information, and send first data in an $(i+1)^{th}$ transmission.

When the communication apparatus 1300 is configured to implement the functions of the network apparatus in the method embodiment shown in FIG. 7, the processing unit 1310 is configured to: through the transceiver unit 1320, send the first data in the $(i+1)^{th}$ transmission, and send third information.

For more detailed descriptions of the processing unit 1310 and the transceiver unit 1320, refer to related descriptions in the method embodiment shown in FIG. 4 or FIG. 7.

As shown in FIG. 10, a communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the method shown in FIG. 4 or FIG. 7, the processor 1410 is configured to implement a function of the processing unit 1310, and the interface circuit 1420 is configured to implement a function of the transceiver unit 1320.

When the communication apparatus is a chip used in a terminal, the chip in the terminal implements the functions of the terminal apparatus in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements the functions of the network apparatus in the foregoing method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by these modules.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be disposed in a base station or a terminal. Certainly, the processor and the storage medium may exist in a base station or a terminal as discrete components.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer program or the instructions are loaded and executed on a computer, all or a part of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers (for example, numeric numbers such as "first" and "second", or letter numbers such as "parameter A", "parameter B", and "parameter C") in embodiments of this application are merely for distinguishing for ease of description, and are not intended to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applicable to a terminal apparatus, and the method comprises:

    performing blind detection on a physical downlink control channel PDCCH, wherein the PDCCH is used to schedule first data in an $i^{th}$ transmission, i is a positive integer less than or equal to $N_0$, $N_0$ is a quantity of allowed transmissions of the first data, and $N_0$ is a positive integer greater than 1; and
    after the PDCCH is successfully decoded, stopping PDCCH blind detection in a first duration, and sending first information, wherein
    the first information comprises: information indicating that the first data is successfully decoded, or the first data.

2. The method according to claim 1, wherein information used for determining the first duration comprises one or more of the following content:

    $N_0$;
    a duration corresponding to $N_0$ transmissions of the first data;
    a time interval between two adjacent transmissions of the first data;
    a time interval between two adjacent PDCCHs; or
    m, wherein m is a first quantity of PDCCHs on which PDCCH blind detection is stopped.

3. The method according to claim 2, wherein the first duration comprises a corresponding duration from an $(i+1)^{th}$ transmission to an $(i+k)^{th}$ transmission of the first data, k is determined based on m and $N_1$, $N_1$ is a quantity of remaining allowed transmissions of the first data, and $N_1$ is 0 or a positive integer less than $N_0$; or
    the first duration comprises a corresponding duration between a PDCCH used to schedule the $(i+1)^{th}$ transmission of the first data and a PDCCH used to schedule the $(i+k)^{th}$ transmission of the first data.

4. The method according to any one of claims 1 to 3, wherein the information used for determining the first duration comprises one or more of the following content:

    a timing advance;
    an offset (K_mac) between downlink frame timing and uplink frame timing;
    a scheduling offset (K_offset);
    a data processing delay ($\Delta t$), wherein the data processing delay ($\Delta t$) means a processing delay of at least one of a PDCCH, a PDSCH, or a PUSCH;
    a downlink scheduling delay ($k_0$), wherein the downlink scheduling delay ($k_0$) indicates a delay of a PDSCH scheduled by using a PDCCH;
    a first feedback delay ($k_1$), wherein the first feedback delay ($k_1$) indicates a delay of feedback information corresponding to a PDSCH scheduled by using a PDCCH in a second communication system; or
    a first uplink scheduling delay ($k_2$), wherein the first uplink scheduling delay ($k_2$) indicates a delay of a PUSCH scheduled by using a PDCCH in a second communication system.

5. The method according to claim 4, wherein the information used for determining the first duration comprises one or more of the following content:

a second feedback delay, wherein the second feedback delay indicates a delay of feedback information corresponding to a PDSCH scheduled by using a PDCCH in a first communication system;

a second uplink scheduling delay, wherein the second uplink scheduling delay indicates a delay of a PUSCH scheduled by using a PDCCH in a first communication system;

a second duration, wherein the second duration is determined based on a duration between a time at which the PDCCH is successfully decoded and a transmission end time of a PDCCH used to schedule an $N_0^{th}$ transmission of the first data, or the second duration is determined based on a duration between a time at which the PDSCH is successfully decoded and a transmission end time of a physical downlink shared channel PDSCH used to schedule an $N_0^{th}$ transmission of the first data; or

a third duration, wherein the third duration is determined based on at least one of the timing advance, the offset (K_mac) between the downlink frame timing and the uplink frame timing, or the data processing delay ($\Delta t$).

6. The method according to any one of claims 1 to 5, wherein the method further comprises:

receiving first configuration information, wherein the first configuration information comprises the information used for determining the first duration; and

determining the first duration based on the information used for determining the first duration.

7. The method according to any one of claims 1 to 6, wherein sending the first information comprises:

sending the first information on a first resource; and

sending the first information on a second resource, wherein

when the first resource comprises a feedback resource of the first data in the $i^{th}$ transmission, the second resource comprises a feedback resource of the first data in an $(i+a)^{th}$ transmission, the first information comprises information indicating that the first data is successfully decoded, a is a positive integer, and (i+a) is less than or equal to $N_0$; and

when the first resource comprises a resource of the first data in the $i^{th}$ transmission, the second resource comprises a resource of the first data in the $(i+a)^{th}$ transmission, the first information comprises the first data.

8. A communication method, wherein the method is applicable to a network apparatus, and the method comprises:

sending a physical downlink control channel PDCCH, wherein the PDCCH is used to schedule first data in an $i^{th}$ transmission, i is a positive integer less than or equal to $N_0$, $N_0$ is a quantity of allowed transmissions of the first data, and $N_0$ is a positive integer greater than 1;

sending first configuration information, wherein the first configuration information comprises information used for determining a first duration, and the first configuration information is used by a terminal apparatus to stop PDCCH blind detection in the first duration after the PDCCH is successfully decoded; and

receiving first information, wherein the first information comprises: information indicating that the first data is successfully decoded, or the first data.

9. The method according to claim 8, wherein the information used for determining the first duration comprises one or more of the following content:

$N_0$;

a duration corresponding to $N_0$ transmissions of the first data;

a time interval between two adjacent transmissions of the first data;

a time interval between two adjacent PDCCHs; or

m, wherein m is a first quantity of PDCCHs on which PDCCH blind detection is stopped.

10. The method according to claim 9, wherein the first duration comprises a corresponding duration from an $(i+1)^{th}$ transmission to an $(i+k)^{th}$ transmission of the first data, k is determined based on m and $N_1$, $N_1$ is a quantity of remaining allowed transmissions of the first data, and $N_1$ is 0 or a positive integer less than $N_0$; or

the first duration comprises a corresponding duration between a PDCCH used to schedule the $(i+1)^{th}$ transmission of the first data and a PDCCH used to schedule the $(i+k)^{th}$ transmission of the first data.

11. The method according to any one of claims 8 to 10, wherein the information used for determining the first duration comprises one or more of the following content:

> a timing advance;
> an offset (K_mac) between downlink frame timing and uplink frame timing;
> a scheduling offset (K_offset);
> a data processing delay ($\Delta t$), wherein the data processing delay ($\Delta t$) means a processing delay of at least one of a PDCCH, a PDSCH, or a PUSCH;
> a downlink scheduling delay ($k_0$), wherein the downlink scheduling delay ($k_0$) indicates a delay of a PDSCH scheduled by using a PDCCH;
> a first feedback delay ($k_1$), wherein the first feedback delay ($k_1$) indicates a delay of feedback information corresponding to a PDSCH scheduled by using a PDCCH in a second communication system; or
> a first uplink scheduling delay ($k_2$), wherein the first uplink scheduling delay ($k_2$) indicates a delay of a PUSCH scheduled by using a PDCCH in a second communication system.

12. The method according to claim 11, wherein the information used for determining the first duration comprises one or more of the following content:

> a second feedback delay, wherein the second feedback delay indicates a delay of feedback information corresponding to a PDSCH scheduled by using a PDCCH in a first communication system;
> a second uplink scheduling delay, wherein the second uplink scheduling delay indicates a delay of a PUSCH scheduled by using a PDCCH in a first communication system;
> a second duration, wherein the second duration is determined based on a duration between a time at which the PDCCH is successfully decoded and a transmission end time of a PDCCH in an $N_0^{th}$ transmission, or the second duration is determined based on a duration between a time at which the PDSCH is successfully decoded and a transmission end time of a PDSCH in an $N_0^{th}$ transmission; or
> a third duration, wherein the third duration is determined based on at least one of the timing advance, the offset (K_mac) between the downlink frame timing and the uplink frame timing, or the data processing delay ($\Delta t$).

13. The method according to any one of claims 8 to 12, wherein receiving the first information comprises:

> receiving the first information on a first resource; and
> receiving the first information on a second resource, wherein
> when the first resource comprises a feedback resource of the first data in the $i^{th}$ transmission, the second resource comprises a feedback resource of the first data in an $(i+a)^{th}$ transmission, the first information comprises information indicating that the first data is successfully decoded, a is a positive integer, and (i+a) is less than or equal to $N_0$; and
> when the first resource comprises a resource of the first data in the $i^{th}$ transmission, the second resource comprises a resource of the first data in the $(i+a)^{th}$ transmission, the first information comprises the first data.

14. A communication apparatus, wherein the apparatus comprises a processor and an interface circuit, wherein the processor is configured to:

> perform blind detection on a physical downlink control channel PDCCH, wherein the PDCCH is used to schedule first data in an $i^{th}$ transmission, i is a positive integer less than or equal to $N_0$, $N_0$ is a quantity of allowed transmissions of the first data, and $N_0$ is a positive integer greater than 1; and
> after the PDCCH is successfully decoded, stop PDCCH blind detection in a first duration, and send first information by using the interface circuit, wherein
> the first information comprises: information indicating that the first data is successfully decoded, or the first data.

15. The apparatus according to claim 14, wherein information used for determining the first duration comprises one or more of the following content:

> $N_0$;
> a duration corresponding to $N_0$ transmissions of the first data;
> a time interval between two adjacent transmissions of the first data;
> a time interval between two adjacent PDCCHs; or
> m, wherein m is a first quantity of PDCCHs on which PDCCH blind detection is stopped.

16. The apparatus according to claim 15, wherein the first duration comprises a corresponding duration from an $(i+1)^{th}$ transmission to an $(i+k)^{th}$ transmission of the first data, k is determined based on m and $N_1$, $N_1$ is a quantity of remaining allowed transmissions of the first data, and $N_1$ is 0 or a positive integer less than $N_0$; or
the first duration comprises a corresponding duration between a PDCCH used to schedule the $(i+1)^{th}$ transmission of the first data and a PDCCH used to schedule the $(i+k)^{th}$ transmission of the first data.

17. The apparatus according to any one of claims 14 to 16, wherein the information used for determining the first duration comprises one or more of the following content:

    a timing advance;
    an offset (K_mac) between downlink frame timing and uplink frame timing;
    a scheduling offset (K_offset);
    a data processing delay ($\Delta t$), wherein the data processing delay ($\Delta t$) means a processing delay of at least one of a PDCCH, a PDSCH, or a PUSCH;
    a downlink scheduling delay ($k_0$), wherein the downlink scheduling delay ($k_0$) indicates a delay of a PDSCH scheduled by using a PDCCH;
    a first feedback delay ($k_1$), wherein the first feedback delay ($k_1$) indicates a delay of feedback information corresponding to a PDSCH scheduled by using a PDCCH in a second communication system; or
    a first uplink scheduling delay ($k_2$), wherein the first uplink scheduling delay ($k_2$) indicates a delay of a PUSCH scheduled by using a PDCCH in a second communication system.

18. The apparatus according to claim 17, wherein the information used for determining the first duration comprises one or more of the following content:

    a second feedback delay, wherein the second feedback delay indicates a delay of feedback information corresponding to a PDSCH scheduled by using a PDCCH in a first communication system;
    a second uplink scheduling delay, wherein the second uplink scheduling delay indicates a delay of a PUSCH scheduled by using a PDCCH in a first communication system;
    a second duration, wherein the second duration is determined based on a duration between a time at which the PDCCH is successfully decoded and a transmission end time of a PDCCH used to schedule an $N_0^{th}$ transmission of the first data, or the second duration is determined based on a duration between a time at which the PDSCH is successfully decoded and a transmission end time of a physical downlink shared channel PDSCH used to schedule an $N_0^{th}$ transmission of the first data; or
    a third duration, wherein the third duration is determined based on at least one of the timing advance, the offset (K_mac) between the downlink frame timing and the uplink frame timing, or the data processing delay ($\Delta t$).

19. The apparatus according to any one of claims 14 to 18, wherein the processor is further configured to:

    receive first configuration information by using the interface circuit, wherein the first configuration information comprises the information used for determining the first duration; and
    determine the first duration based on the information used for determining the first duration.

20. The apparatus according to any one of claims 14 to 19, wherein the interface circuit is specifically configured to:

    send the first information on a first resource; and
    send the first information on a second resource, wherein
    when the first resource comprises a feedback resource of the first data in the $i^{th}$ transmission, the second resource comprises a feedback resource of the first data in an $(i+a)^{th}$ transmission, the first information comprises information indicating that the first data is successfully decoded, a is a positive integer, and $(i+a)$ is less than or equal to $N_0$; and
    when the first resource comprises a resource of the first data in the $i^{th}$ transmission, the second resource comprises a resource of the first data in the $(i+a)^{th}$ transmission, the first information comprises the first data.

21. A communication apparatus, wherein the apparatus comprises a processor and an interface circuit, wherein

    the processor is configured to: by using the interface circuit,
    send a physical downlink control channel PDCCH, wherein the PDCCH is used to schedule first data in an $i^{th}$ transmission, i is a positive integer less than or equal to $N_0$, $N_0$ is a quantity of allowed transmissions of the first

data, and $N_0$ is a positive integer greater than 1;

send first configuration information, wherein the first configuration information comprises information used for determining a first duration, and the first configuration information is used by a terminal apparatus to stop PDCCH blind detection in the first duration after the PDCCH is successfully decoded; and

receive first information, wherein the first information comprises: information indicating that the first data is successfully decoded, or the first data.

22. The apparatus according to claim 21, wherein the information used for determining the first duration comprises one or more of the following content:

$N_0$;

a duration corresponding to $N_0$ transmissions of the first data;

a time interval between two adjacent transmissions of the first data;

a time interval between two adjacent PDCCHs; or

m, wherein m is a first quantity of PDCCHs on which PDCCH blind detection is stopped.

23. The apparatus according to claim 22, wherein the first duration comprises a corresponding duration from an $(i+1)^{th}$ transmission to an $(i+k)^{th}$ transmission of the first data, k is determined based on m and $N_1$, $N_1$ is a quantity of remaining allowed transmissions of the first data, and $N_1$ is 0 or a positive integer less than $N_0$; or

the first duration comprises a corresponding duration between a PDCCH used to schedule the $(i+1)^{th}$ transmission of the first data and a PDCCH used to schedule the $(i+k)^{th}$ transmission of the first data.

24. The apparatus according to any one of claims 21 to 23, wherein the information used for determining the first duration comprises one or more of the following content:

a timing advance;

an offset (K_mac) between downlink frame timing and uplink frame timing;

a scheduling offset (K_offset);

a data processing delay ($\Delta t$), wherein the data processing delay ($\Delta t$) means a processing delay of at least one of a PDCCH, a PDSCH, or a PUSCH;

a downlink scheduling delay ($k_0$), wherein the downlink scheduling delay ($k_0$) indicates a delay of a PDSCH scheduled by using a PDCCH;

a first feedback delay ($k_1$), wherein the first feedback delay ($k_1$) indicates a delay of feedback information corresponding to a PDSCH scheduled by using a PDCCH in a second communication system; or

a first uplink scheduling delay ($k_2$), wherein the first uplink scheduling delay ($k_2$) indicates a delay of a PUSCH scheduled by using a PDCCH in a second communication system.

25. The apparatus according to claim 24, wherein the information used for determining the first duration comprises one or more of the following content:

a second feedback delay, wherein the second feedback delay indicates a delay of feedback information corresponding to a PDSCH scheduled by using a PDCCH in a first communication system;

a second uplink scheduling delay, wherein the second uplink scheduling delay indicates a delay of a PUSCH scheduled by using a PDCCH in a first communication system;

a second duration, wherein the second duration is determined based on a duration between a time at which the PDCCH is successfully decoded and a transmission end time of a PDCCH in an $N_0^{th}$ transmission, or the second duration is determined based on a duration between a time at which the PDSCH is successfully decoded and a transmission end time of a PDSCH in an $N_0^{th}$ transmission; or

a third duration, wherein the third duration is determined based on at least one of the timing advance, the offset (K_mac) between the downlink frame timing and the uplink frame timing, or the data processing delay ($\Delta t$).

26. The apparatus according to any one of claims 21 to 25, wherein the processor is specifically configured to: by using the interface circuit,

receive the first information on a first resource; and

receive the first information on a second resource, wherein

when the first resource comprises a feedback resource of the first data in the $i^{th}$ transmission, the second resource comprises a feedback resource of the first data in an $(i+a)^{th}$ transmission, the first information comprises

information indicating that the first data is successfully decoded, a is a positive integer, and (i+a) is less than or equal to $N_0$; and

when the first resource comprises a resource of the first data in the $i^{th}$ transmission, the second resource comprises a resource of the first data in the $(i+a)^{th}$ transmission, the first information comprises the first data.

27. A communication apparatus, comprising a module configured to perform the method according to any one of claims 1 to 7, or comprising a module configured to perform the method according to any one of claims 8 to 13.

28. A communication apparatus, comprising a processor, wherein the processor is configured to implement, by using a logic circuit or by executing code instructions, the method according to any one of claims 1 to 7 or the method according to any one of claims 8 to 13.

29. A computer-readable storage medium, wherein the storage medium stores a computer program or instructions, and when the computer program or the instructions are executed by a communication apparatus, the method according to any one of claims 1 to 7 or the method according to any one of claims 8 to 13 is implemented.

30. A computer program product, wherein the computer program product stores a computer program, the computer program comprises program instructions, and when the program instructions are executed by a computer, the computer is caused to perform the method according to any one of claims 1 to 7 or the method according to any one of claims 8 to 13.

FIG. 1

Satellite

Service link

Feeder link

Terminal device

Terminal device

Gateway    Base station

FIG. 2

Terminal device (aircraft)

Terminal device (aircraft)

Terminal device (aircraft)

Network device

Network device

Network device

FIG. 3

| Network apparatus | | Terminal apparatus |
|---|---|---|

401: PDCCH

402: The terminal apparatus performs blind detection on the PDCCH

403: The terminal apparatus successfully decodes the PDCCH, and stops PDCCH blind detection in a first duration

404: Send first information

FIG. 4

FIG. 5

EP 4 742 770 A1

Retransmission periodicity

Retransmission or new data

Invalid PDCCH detection in an NTN scenario

PDCCH on which blind detection starts

Maximum retransmission time offset (max_repetition_offset)

Retransmission time offset (repetition_offset)

Retransmission time offset (repetition_offset)

Retransmission time offset (repetition_offset)

Retransmission time offset (repetition_offset)

Retransmission time offset (repetition_offset)

Time sequence of a PDCCH sent by a network apparatus — DL

#21 #22 #23 #24 #25 #26

Time

Duration #21 (k₂)

Time sequence of information received by the network apparatus — UL

PUSCH PUSCH PUSCH PUSCH PUSCH PUSCH

Time

(Second communication system) (For example, a terrestrial communication system)

Time sequence of information received by the network apparatus — UL

Duration #22 (k₂+K_offset+k_mac)

PUSCH PUSCH PUSCH PUSCH PUSCH PUSCH

Resource #21 Resource #22 Resource #23 Resource #24 Resource #25 Resource #26

Time

(First communication system) (For example, an NTN)

PDCCH

FIG. 6

701: First data in an $i^{th}$ transmission

702: First indication information

703: Whether a next PDSCH is retransmission of data

Y

N

704: First data in an $(i+1)^{th}$ transmission

705: Second data

FIG. 7

FIG. 8

Communication apparatus 1300

Processing unit 1310

Transceiver unit 1320

FIG. 9

Communication apparatus 1400

Processor 1410

Interface circuit 1420

Memory 1430

FIG. 10

## INTERNATIONAL SEARCH REPORT

| International application No. |
| --- |
| **PCT/CN2023/116949** |

| A. | CLASSIFICATION OF SUBJECT MATTER |
| --- | --- |

H04W 52/02(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNKI, DWPI, CNTXT, ENTXTC, 3GPP: 物理下行控制信道, 物理下行链路控制信道, 停, 停止, 暂停, 重复, 重传, 译码, 解码, 盲; PDCCH, PDSCH, PUSCH: stop, skip, repeat, repetition, retransm+, blind, reduce, monitor

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023014015 A1 (LG ELECTRONICS INC.) 09 February 2023 (2023-02-09) description, paragraphs 0163-0331 | 1-30 |
| A | CN 111615806 A (QUALCOMM INC.) 01 September 2020 (2020-09-01) entire document | 1-30 |
| A | US 2022007426 A1 (GUANGDONG OPPO MOBILE TELECOMMUNICATIONS CORP., LTD.) 06 January 2022 (2022-01-06) entire document | 1-30 |
| A | HUAWEI et al. "Discussion on HARQ enhancement for IoT in NTN" *3GPP TSG RAN WG1 Meeting #105-e, R1-2104261*, 27 May 2021 (2021-05-27), entire document | 1-30 |

☐ Further documents are listed in the continuation of Box C.    ☑ See patent family annex.

| | |
| --- | --- |
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **21 May 2024** | **29 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116949**

| Patent document cited in search report | | | Publication date (day/month/year) | Patent family member(s) | | | Publication date (day/month/year) |
|---|---|---|---|---|---|---|---|
| WO | 2023014015 | A1 | 09 February 2023 | KR | 20240028450 | A | 05 March 2024 |
| CN | 111615806 | A | 01 September 2020 | EP | 3744028 | A1 | 02 December 2020 |
| | | | | US | 2019230697 | A1 | 25 July 2019 |
| | | | | WO | 2019143985 | A1 | 25 July 2019 |
| | | | | EP | 4044481 | A1 | 17 August 2022 |
| US | 2022007426 | A1 | 06 January 2022 | WO | 2020186546 | A1 | 24 September 2020 |
| | | | | EP | 3930414 | A1 | 29 December 2021 |
| | | | | CN | 113519201 | A | 19 October 2021 |
| | | | | CN | 113905453 | A | 07 January 2022 |

Form PCT/ISA/210 (patent family annex) (July 2022)